# EUROPÄISCHE PATENTSCHRIFT

(11) **EP 3 183 477 B1**
(45) Veröffentlichungstag und Bekanntmachung des Hinweises auf die Patenterteilung: **27.06.2018**
(21) Anmeldenummer: 15738932.1
(22) Anmeldetag: 21.07.2015
(51) Int. Cl.: F16H 61/02, F16D 48/02

(54) **HYDRAULISCHE STEUERUNGSVORRICHTUNG FÜR EIN AUTOMATIKGETRIEBE**
HYDRAULIC CONTROL DEVICE FOR AN AUTOMATIC TRANSMISSION
DISPOSITIF DE COMMANDE HYDRAULIQUE POUR TRANSMISSION AUTOMATIQUE

(30) Priorität: 21.08.2014 DE 102014216580
(43) Veröffentlichungstag der Anmeldung: 28.06.2017
(73) Patentinhaber: ZF Friedrichshafen AG, 88046 Friedrichshafen (DE)
(72) Erfinder: HERRMANN, Markus, 88175 Scheidegg (DE); HAUPT, Josef, 88069 Tettnang (DE); ROEGNER, Horst, 88094 Oberteuringen (DE)
(86) Internationale Anmeldenummer: PCT/EP2015/066588
(87) Internationale Veröffentlichungsnummer: WO 2016/026636

(56) Entgegenhaltungen:
- DE-A1- 2 445 699
- DE-A1- 2 705 674
- DE-A1- 3 338 595
- DE-A1- 10 205 411
- DE-A1-102005 013 137

## Beschreibung

Die Erfindung betrifft eine hydraulische Steuerungsvorrichtung für ein Automatikgetriebe nach dem Oberbegriff des Patentanspruchs 1 und ein Automatikgetriebe nach dem Patentanspruch 17.

Bei Automatikgetrieben für Kraftfahrzeuge, wie beispielsweise aus der DE 198 58 541 A1 bekannt, werden die Übersetzungsstufen durch Schaltelemente, worunter nachfolgend reibschlüssige Kupplungen oder Bremsen zu verstehen sind, eingestellt. Kupplungen, welche zwei drehbare Elemente drehfest miteinander verbinden können, und Bremsen, welche ein drehbares mit einem feststehenden bzw. mit dem Getriebegehäuse drehfest verbundenen Element drehfest verbinden sind in dem offenbarten Automatikgetriebe als Lamellenschaltelemente ausgebildet.

Grundsätzlich können die Schaltelemente eines Automatikgetriebes sowohl als reibschlüssige Lamellenschaltelemente auch als formschlüssige Schaltelemente, wie beispielsweise Klauenschaltelemente, ausgebildet sein. In Automatikgetrieben ist zumindest ein Teil der Schaltelemente reibschlüssig auszubilden, um Lastschaltungen, d.h. einen Übersetzungswechsel ohne Zugkraftunterbrechung, durchführen zu können.

Die Betätigung, d.h. das Schließen der Schaltelemente zur Drehmomentübertragung erfolgt bei bekannten Automatikgetrieben hydraulisch, d. h. über Aktuatoren in Form von Kolben/Zylinder-Einheiten, welche mit Drucköl beaufschlagt werden. Von dem Kolben und dem Zylinder wird ein Betätigungsdruckraum gebildet, welcher zur Betätigung des Schaltelements von einem unter einem Betätigungsdruck stehenden Drucköl beaufschlagt wird. Das Drucköl wird von einer motorgetriebenen Pumpe als Druckquelle gefördert und muss während der gesamten Betriebsdauer des Automatikgetriebes auf einem Druckniveau gehalten werden, welches eine zu einer Drehmomentübertragung ausreichende Anpresskraft der Lamellen im Schaltelement erzeugt. Die Energie zur Druckerzeugung mittels der Hydraulikpumpe muss vom Motor des Kraftfahrzeuges aufgebracht werden, so dass die Erzeugung der hydraulischen Leistung den Kraftstoffverbrauch und damit CO_2-Emission erhöht, bzw. durch die Leistungsverluste die für den Antrieb des Fahrzeugs bereitstehende Energie verringert. Somit sinkt auch der Getriebewirkungsgrad.

Zudem entstehen an Dichtstellen wie beispielsweise Druckölzuführungen vom Getriebegehäuse über so genannte Drehölzuführungen, welche mittels Spaltdichtungen, z. B. Gleitlager und / oder Rechteckringe abgedichtet sind, in die rotierende Getriebewelle Leckageverluste. Diese erfordern ein laufendes Nachführen des Öldrucks im Aktuator bei einem geschlossenen Schaltelement bzw. ein Nachspeisen der Leckagemenge, um das Schaltelement geschlossen zu halten.

Um den Druck im Aktuator vom Druck der Pumpe unabhängig zu machen und die Leckage-Verluste zu minimieren kann der Kolbenraum durch verschiedene Verriegelungsmechanismen abgesperrt werden, so dass der Druck im Kolbenraum verbleibt und nicht weiter Öl gefördert werden muss. Nur während des Schaltvorgangs wird das Ventil geöffnet und anschließend mit dem entsprechenden Druck gefüllt. Aus der DE 102 05 411 A1 der Anmelderin ist eine hydraulische Steuerungsvorrichtung bekannt, mittels welcher bei einem bei einer gewünschten Drehmomentübertragung die durch Druckbeaufschlagung schließbaren Lamellenschaltelemente außerhalb der Schaltungen durch eine Sperreinrichtung verriegelt werden, in dem ein Absperrventil im Zuführbereich des Schaltelements verschlossen wird. Dadurch bleibt der Druck in dem als Aktuator wirkenden Betätigungszylinder und damit die Anpresskraft zwischen den Lamellen aufrechterhalten, ohne dass von der Getriebepumpe ein hydraulischer Druck in der Größe des Betätigungsdrucks des Schaltelements erzeugt werden muss.

Absperrventile können je nach Anwendungsfall so ausgebildet sein, dass sie bei einem Systemdruck auf dem Niveau des Umgebungsdrucks geschlossen ("normally closed") oder geöffnet ("normally open") sind.

Der von der Getriebepumpe zu erzeugende Druck kann somit gegenüber dem im Schaltelement eingeschlossenen Betätigungsdruck abgesenkt werden. Obwohl theoretisch möglich, wird die Pumpe jedoch nicht ganz abgeschaltet bzw. drucklos, da auch bei geschlossenen und verriegelten Schaltelementen ein Ölbedarf auf niedrigem Druckniveau im Getriebe weiter besteht, beispielsweise für Kühlung und Schmierung oder zur Vorbefüllung von Schaltelement zur Vorbereitung eines Schaltvorganges. Durch die damit mögliche Druckabsenkung wird die Leistungsaufnahme der Getriebeölpumpe, welche sich als Produkt aus gefördertem Volumenstrom und erzeugter Druckdifferenz errechnet, deutlich reduziert. Mit einer geringeren Leistungsaufnahme der Getriebepumpe erhöht sich der Gesamtwirkungsgrad des Getriebes, da weniger Motorleistung für die Hydraulik als Blindleistung abgezweigt werden muss und für den Fahrzeugantrieb zur Verfügung steht.

Wird jedoch im geschlossenen Zustand des Absperrventils und damit des Schaltelements das zu übertragende Drehmoment des Getriebes so erhöht, dass der eingeschlossene Betätigungsdruck erhöht werden müsste, ist dies nur möglich, wenn das Absperrventil geöffnet wird, was einen Druckeinbruch im Schaltelementdruckraum und damit nachteiliger weise ein kurzzeitiges Öffnen des Schaltelements bzw. eine Zugkraftunterbrechung bewirkt. Eine Anpassung des auf das reibschlüssige Schaltelement wirkenden Betätigungsdruckes ist somit auch im Falle des theoretisch möglichen Auftretens unerwünschter Leckagen, welche zu einem Absinken des Betätigungsdruckes führen können, nicht möglich.

Die der Erfindung zugrunde liegende Aufgabe ist die Schaffung einer hydraulischen Steuerungseinrichtung für ein Getriebe mit einem hydraulisch betätigbaren Absperrventil, welches in einfacher und funktionssicherer Weise den Betätigungsdruckraum eines unter einem Betätigungsdruck geschlossenen Schaltelements dicht verschließen und damit das Schaltelement unabhängig von dem von der Getriebepumpe erzeugten Druck geschlossen halten und eine Erhöhung des Betätigungsdrucks ermöglichen kann, ohne dass dies zu einem Druckeinbruch im Schaltelement führt.

Diese Aufgabe wird durch die Merkmale des Patentanspruchs 1 gelöst.

Eine hydraulische Steuerungseinrichtung für ein Automatikgetriebe eines Kraftfahrzeugs weist hierbei mehrere Schaltelemente zur schaltbaren Übertragung eines Drehmoments auf, und umfasst mindestens eine erste Druckstelleinrichtung und mindestens ein Absperrventil. Die Schaltelemente weisen jeweils einen Schaltelementzylinder auf, welcher zur Übertragung eines Drehmoments mit einem Versorgungsdruck aus der ersten Druckstelleinrichtung beaufschlagbar ist. Das Absperrventil ist zwischen der ersten Druckstelleinrichtung und dem jeweiligen Schaltelementzylinder angeordnet und hydraulisch mittels eines Steuerdrucks aus einer zweiten Druckstelleinrichtung in mindestens zwei Schaltstellungen schaltbar. In einer ersten Schaltstellung des Absperrventils ist die erste Druckstelleinrichtung durch das Absperrventil mit dem Schaltelementzylinder hydraulisch verbunden, so dass der Versorgungsdruck gleich einem Schaltelementdruck im Schaltelementzylinder ist. In einer zweiten Schaltstellung des Absperrventils ist der Schaltelementzylinder von dem Absperrventil gegenüber der restlichen hydraulischen Steuerungseinrichtung und damit auch gegenüber der ersten Druckstelleinrichtung derart dicht verschließbar, so dass der im Schaltelementzylinder anstehende Schaltelementdruck nicht unter einen bestimmten Wert absinken kann, auch wenn der Versorgungsdruck aus der ersten Druckstelleinrichtung geringer ist als der Schaltelementdruck im Schaltelementzylinder.

Erfindungsgemäß ist das Absperrventil als entsperrbares Rückschlagventil ausgebildet und umfasst ein Rückschlagventil und eine Entsperreinrichtung, welche mittels des Steuerdrucks aus der zweiten Druckstelleinrichtung betätigbar ist.

Der Vorteil einer solchen hydraulischen Steuerungseinrichtung besteht zum einen darin, dass der Druck der Pumpe, welche die Steuerungseinrichtung versorgt, nicht auf der Höhe zu erzeugt werden muss, welche notwendig ist um ein Schaltelement geschlossen zu halten. Hieraus resultiert eine geringere Aufnahmeleistung der Pumpe. Darüber hinaus ist es mit dem erfindungsgemäßen Absperrventil möglich, bei der Anforderung zur Übertragung eines erhöhten Drehmoments an dem Schaltelement den Druck durch das Rückschlagventil zu erhöhen, ohne dass dieser einbricht und das Schaltelement sich öffnen könnte.

Vorteilhafte Ausgestaltungen der Erfindung ergeben sich aus den Unteransprüchen.

In einer Ausgestaltung der Erfindung umfasst das Rückschlagventil einen bewegbaren Verschlusskörper und die Entsperreinrichtung einen bewegbaren Entsperrkörper, wobei der Verschlusskörper zwischen einer Verschlussstellung, in welcher der Schaltelementzylinder gegenüber der restlichen hydraulischen Steuerungseinrichtung abgeschlossen ist, und mindestens einer Öffnungsstellung, in welcher der Schaltelementzylinder zur restlichen Steuerungseinrichtung hin geöffnet ist, bewegbar ist. Der Entsperrkörper ist in dieser Ausgestaltung zwischen einer neutralen Stellung, in welcher der Entsperrkörper nicht mit dem Verschlusskörper wirkverbunden ist, und einer Entsperrstellung an einen Entsperranschlag bewegbar, wobei in der Entsperrstellung der Entsperrkörper derart auf den Verschlusskörper wirksam ist, dass dieser mittels des Entsperrkörpers in die Öffnungsstellung verschoben ist.

Es ist außerdem möglich, dass die Entsperreinrichtung eine Druckfeder aufweist und dass der Entsperrkörper von einer Seite her mit dem Steuerdruck aus der zweiten Druckstelleinrichtung beaufschlagbar ist und von einer anderen Seite her mit einer Kraft der Druckfeder belastet ist.

Bevorzugt ist es bei dieser Ausgestaltung möglich, dass der Entsperrkörper durch die Wirkung des Steuerdruckes in die Entsperrstellung bewegbar ist. Ein derart wirkendes Absperrventil wird als "normally closed" bezeichnet, da bei einer drucklosen hydraulischen Steuerungseinrichtung das Absperrventil geschlossen ist.

In einer alternativen Ausgestaltung hierzu ist der Entsperrkörper durch die Wirkung der Kraft der Druckfeder in die Entsperrstellung bewegbar, falls der auf den Entsperrkörper wirkende Steuerdruck nur so hoch ist, dass die Kraft auf den Entsperrkörper aus dem Steuerdruck geringer ist als die Kraft der Druckfeder. Ein derart wirkendes Absperrventil wird als "normally opened" bezeichnet, da bei einer drucklosen hydraulischen Steuerungseinrichtung das Absperrventil geöffnet ist.

In einer weiteren Ausgestaltung der Erfindung ist es möglich, dass der Entsperrkörper einen Entsperrkolben und einen Stößel umfasst, wobei der Stößel mit dem Entsperrkolben axial zumindest in die Richtung des Verschlusskörpers des Rückschlagventils verschiebbar ist.

Vorteilhafterweise ist das Rückschlagventil als Sitzventil ausgebildet. Dieses weist eine größere Dichtigkeit als ein Schieberventil auf.

In einer bevorzugten Ausgestaltung der Erfindung sind der Entsperrkolben und zumindest ein Längenabschnitt des Stößels zylindrisch ausgebildet, wobei ein Stößeldurchmesser kleiner ist als ein Entsperrkolbendurchmesser. Der Stößel erstreckt sich hierbei von einer Stirnfläche des Entsperrkolbens in axialer Richtung. Das Absperrventil weist in dieser Ausgestaltung eine in einem Gehäusekörper ausgebildete Ventilbohrung mit Bohrungsabschnitten unterschiedlicher Durchmesser auf, umfassend in dieser Reihenfolge aneinander anschließend eine Entsperrzylinderbohrung, eine Stößelbohrung, eine Versorgungsbohrung und eine Verschlusskörperbohrung auf. Hierbei münden in die Entsperrzylinderbohrung axial voneinander beabstandet ein Steuerdruckanschluss zu der zweiten Druckstelleinrichtung und ein Entlastungsanschluss zu einem drucklosen Bereich oder einem Niederdruckbereich. Unter einem Niederdruck ist in diesem Zusammenhang ein Druck zu verstehen, der kleiner ist als der Steuerdruck und Schaltelementdruck. Im Zusammenhang mit einem Automatikgetriebe wird üblicherweise die Kühlung und Schmierung als Niederdruckbereich bezeichnet. In die Versorgungsbohrung mündet ein Versorgungsdruckanschluss zu der ersten Druckstelleinrichtung und in die Verschlusskörperbohrung ein Schaltelementanschluss zu dem Schaltelementzylinder. Zwischen Versorgungsbohrung und Verschlusskörperbohrung ist ein Ventilsitz ausgebildet. In der Entsperrzylinderbohrung ist der Entsperrkolben zwischen zwei Anschlagstellungen, nämlich der neutralen Stellung und der Entsperrstellung, axial verschiebbar angeordnet und wird von der vorgespannten Druckfeder auf der Seite des zweiten Anschlusskanals mit deren Kraft beaufschlagt. Der Stößel wird hierbei in der Stößelbohrung geführt. In der Verschlusskörperbohrung ist der Verschlusskörper axial bewegbar und wird in der Verschlussstellung gegen den Ventilsitz gedrückt, wenn die Kraft aus dem Schaltelementdruck auf den Verschlusskörper größer ist als die vom Versorgungsdruck bewirkte Kraft. Vorteile dieser Ausgestaltung sind eine einfache Herstellbarkeit der Bauteile der Entsperreinrichtung, da diese nur eine Außenbearbeitung erfordern und durch Drehen herstellbar sind, sowie aufgrund des kompakten Aufbaus ein geringer Bedarf an Bauraum.

Bei einer Ausgestaltung des Absperrventils als "normally closed" ist es möglich, dass der Entsperrkolbendurchmesser und damit die vom Steuerdruck beaufschlagte Wirkfläche so gewählt ist, dass der Steuerdruck auch bei einem minimalen Druck, der bei einem abgesperrten Schaltelementzylinder von der Pumpe erzeugt wird, ausreichend ist, um den Verschlusskörper mittels des Entsperrkörpers in die Öffnungsstellung zu bewegen.

Alternativ hierzu ist bei einer Ausgestaltung des Absperrventils als "normally opened" möglich, dass der Entsperrkolbendurchmesser des Entsperrkolbens und damit die vom Steuerdruck beaufschlagte Wirkfläche so gewählt ist, dass der Steuerdruck auch bei einem minimalen Druck, der bei einem abgesperrten Schaltelementzylinder von der Pumpe erzeugt wird, ausreichend ist, um den Entsperrkörper entgegen der Kraft der Druckfeder in der neutralen Stellung zu halten. Die Kennlinie der Druckfeder und die vom Schaltelementdruck beaufschlagte Wirkfläche des Verschlusskörpers sind hierbei so gewählt, dass die Kraft der Druckfeder ausreicht um den Verschlusskörper auch bei dem maximal auftretenden Schaltelementdruck mittels des Entsperrkörpers in die Öffnungsstellung zu bewegen.

In einer vorteilhaften Ausgestaltung ist es möglich, dass das Absperrventil in einer Welle eines Getriebes angeordnet ist. Hierdurch ist das Absperrventil bauraumneutral in einem Getriebe unterzubringen.

Bevorzugt ist der Verschlusskörper als Sitzkolben ausgebildet, wobei dessen dem Ventilsitz zugewandtes Ende sphärisch oder kegelförmig ausgebildet ist. Die Vorteile hiervon sind eine axiale Verschiebbarkeit des Sitzkolbens bei sicherer Führung und ein dichtes Verschließen des Rückschlagventils durch die sphärische Ausbildung des verschließenden Endes.

Es ist in diesem Zusammenhang möglich, dass zwischen dem Sitzkolben und einem dem Ventilsitz entgegengesetzten Ende der Verschlusskörperbohrung eine als Druckfeder ausgebildete Ventilfeder vorgespannt angeordnet ist, deren Kraft auf den Sitzkolben in Richtung des Ventilsitzes wirksam ist. Hierdurch ist vorteilhafterweise ein sicheres und dichtes Schließen des Rückschlagventil gewährleistet.

Eine bevorzugte Variante ist so ausgebildet, dass die Entsperrzylinderbohrung, die Stößelführung, die Versorgungsbohrung und die Verschlusskörperbohrung sowie Entsperrkolben und Stößel konzentrisch zueinander sind. Vorteilhafterweise sind diese hierdurch einfach und kostengünstig fertigbar. Zudem entsteht durch die konzentrische Anordnung, insbesondere zur Welle in welcher das Absperrventil angeordnet ist, keine Unwucht.

Hierbei sind deren axiale Lagen und Längen so gewählt, dass in der Entsperrstellung des Entsperrkolbens der Stößel so weit in die Verschlusskörperbohrung hineinragt, dass der Stößel einen Anschlag für den Verschlusskörper bildet, so dass dieser in einer Öffnungsstellung befindlich ist.

Eine vorteilhafte Variante der hydraulischen Steuerungseinrichtung ist so ausgebildet, dass das Absperrventil einen Gehäusekörper umfasst, in welchem die Entsperreinrichtung und das Rückschlagventil angeordnet sind, so dass das Absperrventil eine modulare Einheit bildet. Vorteilhafterweise ist es möglich, das Absperrventil als Ganzes vorzumontieren. Der Gehäusekörper weist eine zylindrische Außenkontur mit einem Außendurchmesser oder mit mehreren zylindrischen Abschnitten mit unterschiedlichen Außendurchmessern auf, so dass das Absperrventil in eine entsprechend gestaltete Ventilaufnahmebohrung einsetzbar ist. Die Bearbeitung des Entsprechenden Getriebebauteils, in welches das Absperrventil eingesetzt werden soll, ist bei zylindrischen Formen, ob abgestuft oder durchgängig, einfach und kostengünstig. Zudem sind die kreisförmigen Querschnittsformen einfach mittels Dichtringen abdichtbar. Die Außenkontur des Gehäusekörpers stellt die Schnittstelle zum entsprechenden Getriebebauteil, beispielsweise einer Welle oder einem Gehäuse dar, was die Übergabe eines flüssigen Betriebsmediums angeht.

In einer weiteren alternativen Ausgestaltung der Erfindung ist vorgesehen, dass der Verschlusskörper und der Entsperrkolben eines Absperrventils ringförmig ausgebildet sind. Der Entsperrkolben ist hierbei in einem hohlzylindrischen Entsperrkolbenraum angeordnet und der Verschlusskörper ist in einem hohlzylindrischen Verschlusskörperraum angeordnet, wobei der Entsperrkolbenraum und der Verschlusskörperraum innerhalb eines eine Welle umschließenden Gehäusekörpers ausgebildet sind. Das Absperrventil umfasst hierbei mehrere Stößel. Der Verschlusskörper ist mittels eines Federelementes gegen einen ringförmigen Ventilsitz vorgespannt. Zwischen dem Entsperrkolben und einem Ende des Entsperrkolbenraumes ist mindestens ein Druckfederelement angeordnet. Die Stößel sind so ausgebildet und angeordnet, dass diese mit dem Entsperrkolben zumindest in Richtung des Verschlusskörpers verschiebbar sind, wenn sich der Entsperrkolben in die Entsperrstellung bewegt, und sind vom Verschlusskörper in die entgegengesetzte Richtung verschiebbar, wenn sich der Entsperrkolben in der neutralen Stellung befindet. In dieser Ausgestaltung ist weiterhin vorgesehen, dass ein Steuerdruckanschluss, ein Versorgungsdruckanschluss, ein Schaltelementanschluss und ein Entlastungsanschluss radial von innen oder von außen in den Verschlusskörperraum und den Entsperrkolbenraum münden. Steuerdruckanschluss und Versorgungsdruckanschluss sind hierbei jeweils mit einer der beiden Druckstelleinrichtungen verbunden. Der Schaltelementanschluss ist mit dem Schaltelementzylinder und der Entlastungsanschluss mit einem drucklosen Bereich oder einem Niederdruckbereich verbunden. Vorteilhafterweise kann hierdurch das Absperrventil platzsparend in einem Getriebe angeordnet werden, da aufgrund der hohlzylindrischen bzw. hülsenförmigen Gestaltung die radiale Ausdehnung gering ist.

Das Druckfederelement kann vorzugsweise als Schraubenfeder ausgebildet sein. Diese weisen Vorteile hinsichtlich Kosten und Montierbarkeit auf.

Bevorzugt ist es möglich, dass die Länge der Stößel in Verbindung mit der axialen Position des Entsperrkolbens in der Entsperrstellung und der axialen Position des Ventilsitzes so gewählt ist, dass der Stößel so weit durch den Ventilsitz in den Verschlusskörperraum hineinragt, dass der Stößel einen Anschlag für den Verschlusskörper bildet, so dass dieser in einer Öffnungsstellung befindlich ist.

Außerdem ist es möglich, dass ein Automatikgetriebe eine erfindungsgemäße hydraulische Steuerungseinrichtung aufweist, welche wie vorstehend beschrieben ausgestaltet ist. Aufgrund der mittels des Absperrventils möglichen Reduzierung des von der Pumpe erzeugten Drucks kann der Kraftstoffverbrauch und damit der Kohlendioxidausstoß verringert werden.

Ausführungsbeispiele des erfindungsgemäßen Verfahrens sind in den Zeichnungen dargestellt und werden im Folgenden näher beschrieben.

Es zeigen
- Fig. 1: eine schematische Darstellung des Aufbaus einer Ausgestaltung eines Absperrventils, welches "normally closed" ausgeführt ist;
- Fig. 2: eine schematische Darstellung des Aufbaus einer Ausgestaltung eines Absperrventils, welches "normally opened" ausgeführt ist;
- Fig. 3: eine Ausgestaltung eines Absperrventils ("normally closed"), welches in einer Welle angeordnet ist;
- Fig. 4: eine Ausgestaltung eines Absperrventils, welches in einem Getriebegehäuse angeordnet ist;
- Fig. 5a: ein erster Teilschnitt einer Ausgestaltung eines Absperrventils, welches um eine Welle angeordnet ist;
- Fig. 5b: ein zweiter Teilschnitt einer Ausgestaltung eines Absperrventils, welches um eine Welle angeordnet ist, und
- Fig. 6: eine Darstellung des zeitlichen Verlaufs der Drücke des erfindungsgemäßen Absperrventils im Betrieb in Abhängigkeit des von einem Schaltelement zu übertragenden Motormoments.

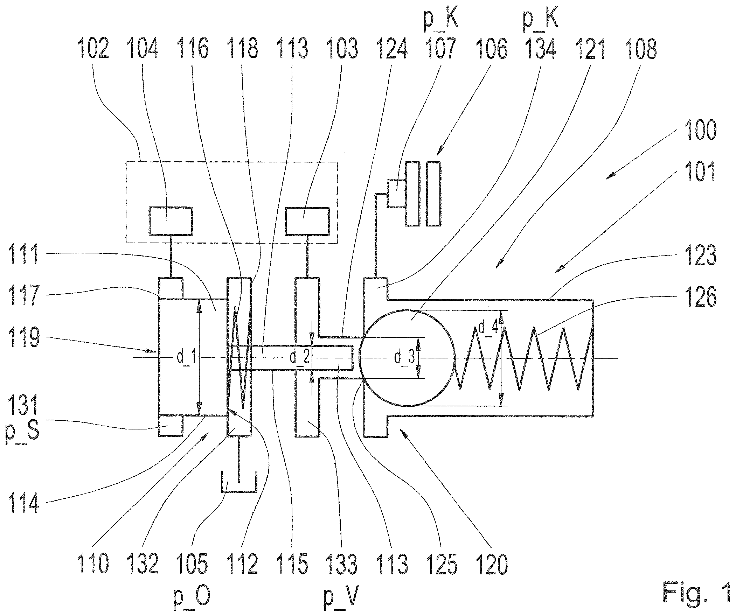

Fig. 1 zeigt eine schematische Darstellung einer hydraulischen Steuerungseinrichtung 100. Diese umfasst ein hydraulisches Schaltgerät 102, ein Schaltelement 106 und ein Absperrventil 101, welches hydraulisch zwischen dem hydraulischen Schaltgerät 102 und dem Schaltelement 106 angeordnet ist. Das hydraulische Schaltgerät 102 ist damit durch das Absperrventil 101 mit dem Schaltelement 106 verbindbar oder mittels diesem trennbar.

Das Absperrventil 101 ist als entsperrbares Rückschlagventil ausgebildet und umfasst eine Entsperreinrichtung 110 und ein Rückschlagventil 120. Das Rückschlagventil 120 lässt einen Durchfluss nur in einer Richtung zu und sperrt sich gegen eine Durchströmung aus der anderen Richtung. Mittels der Entsperreinrichtung 110 kann diese Sperrung aufgehoben werden, was nachfolgend auch als Entsperrung bezeichnet wird.

In einem beliebigen Gehäusekörper 108 ist eine Ventilbohrung ausgebildet, welche mehrere Bohrungsabschnitte mit unterschiedlichen Durchmessern aufweist. Die Bohrungsabschnitte werden nachfolgend als Entsperrzylinderbohrung 114, Stößelführung 115, Versorgungsbohrung 124 und Verschlusskörperbohrung 123 bezeichnet.

Im Bereich der Entsperreinrichtung 110 ist die Entsperrzylinderbohrung 114 ausgebildet, welche einen Durchmesser d_1 aufweist, der größer ist als ein Durchmesser d_2 der Stößelführung 115, welche sich an die Entsperrzylinderbohrung 114 anschließt. Innerhalb der Entsperrzylinderbohrung 114 ist ein zylindrischer Entsperrkolben 111 axial zwischen zwei Anschlagpositionen 117 und 118, welches die Enden der Entsperrzylinderbohrung 114 sind, verschiebbar angeordnet. Eine Anschlagposition wird als neutrale Stellung 117 und eine zweite Anschlagposition als Entsperranschlag 118 bezeichnet. An einer Stirnfläche 112 des Entsperrkolbens 111 ist ein Stößel 113 angeordnet, welcher ebenfalls eine zylindrische Form aufweist. Der Stößel 113 und der Entsperrkolben 111 bilden einen Entsperrkörper 119. Dieser ist in dem in Fig.1 gezeigten Beispiel einstückig ausgeführt. Es ist aber auch möglich, dass Stößel und Entsperrkolben separate Bauteile sind, die miteinander wirkverbunden sind. Zwischen dem Entsperrkolben 111 und dem Entsperranschlag 118 ist eine Druckfeder 116 angeordnet, welche eine Kraft auf den Entsperrkolben 111 in Richtung des neutralen Anschlags 117 ausübt.

An die Stößelführung 115 schließt sich eine Versorgungsbohrung 124 an, die einen Durchmesser d_3 aufweist, welcher größer als der Durchmesser d_2 der Stößelführung und damit auch der Durchmesser des Stößels 113 ist. Die Versorgungsbohrung 124 mündet in eine Verschlusskörperbohrung 123, welche einen Durchmesser d_4 aufweist, der größer ist als der Durchmesser d_3 der Versorgungsbohrung 124. Der Übergang von der Versorgungsbohrung 124 zur Verschlusskörperbohrung 123 bildet einen Ventilsitz 125.

Innerhalb der Verschlusskörperbohrung 123 ist ein als Kugel ausgebildeter Verschlusskörper 121 zumindest zwischen dem Ventilsitz 125 und einem dem Ventilsitz 125 abgewandtem zweiten Ende des Verschlusskörperbohrung 123 axial beweglich angeordnet. Der Verschlusskörper 121 kann hierbei eine Verschlussstellung einnehmen, wenn er am Ventilsitz 125 anliegt und damit die Versorgungsbohrung 124 gegen die Verschlusskörperbohrung 123 verschließt. Damit ist das Rückschlagventil 120 als Sitzventil ausgebildet. Dieses hat gegenüber einem Schieberventil den Vorteil einer hohen Dichtigkeit, da aufgrund der theoretisch spaltfreien Anlage des kugeligen Verschlusskörpers 121 an den kreisförmigen Ventilsitz 125 keine Leckage auftreten kann. Zwischen dem Verschlusskörper 121 und dem zweiten Ende der Verschlusskörperbohrung 123 ist eine Ventilfeder 126 vorgespannt angeordnet, deren Kraft auf den Verschlusskörper 121 in Richtung des Ventilsitzes 125 wirkt.

Die Entsperrzylinderbohrung 114 ist an dem Ende, welches den Anschlag 117 für die neutrale Stellung des Entsperrkörpers 119 darstellt, radial von einem Steuerdruckanschluss 131 durchdrungen, welcher mit einer Druckstelleinrichtung 104 des hydraulischen Schaltgeräts 102 verbunden ist. Die Druckstelleinrichtung 104 stellt einen Steuerdruck p_S ein, welcher durch den Steuerdruckanschluss 131 in die Entsperrzylinderbohrung 114 gelangt. Dort wird der Entsperrkolben 111 von dem Steuerdruck p_S beaufschlagt und entgegen der Kraft der Druckfeder 116 in die Entsperrstellung an den Entsperranschlag 118 bewegt, wenn die Kraft des Steuerdrucks p_S größer ist als die Kraft der Druckfeder 116 . An dem anderen Ende der Entsperrzylinderbohrung 114, welches den Entsperranschlag 118 darstellt, ist die Entsperrzylinderbohrung 114 radial von einem Druckraum 132 durchdrungen, der mit einem drucklosen Bereich 105 verbunden ist. Unter dem Begriff "drucklos" ist in diesem Zusammenhang ein Druck zu verstehen, welcher wenigstens annähernd dem Umgebungsdruck p_0 der umgebenden Atmosphäre entspricht.

Die Versorgungsbohrung 124 ist radial von einem Versorgungsdruckraum 133 durchdrungen. Dieser ist mit einer Druckstelleinrichtung 103 des hydraulischen Schaltgeräts 102 verbunden, wobei mittels der Druckstelleinrichtung 103 ein Versorgungsdruck p_V eingestellt bzw. geregelt wird. Die Verschlusskörperbohrung 123 wird am Übergang dieser in die Versorgungsbohrung 124 radial von einem Schaltelementdruckraum 134 durchdrungen, welcher direkt mit einem Schaltelementzylinder 107 des Schaltelements 106 verbunden ist.

Die Darstellung zeigt die Elemente des Absperrventils 101 in den Stellungen, welche diese im drucklosen Zustand der hydraulischen Steuerungsvorrichtung einnehmen. Ein druckloser Zustand besteht beispielsweise beim Stillstand der Pumpe, wenn in allen Druckräumen wenigstens annähernd Umgebungsdruck herrscht. Da der Steuerdruck p_S drucklos ist, wird der Entsperrkörper 119 unter der Wirkung der vorgespannten Druckfeder 116 in die neutrale Stellung am Anschlag 117 gedrückt. Der kugelförmige Verschlusskörper 121 wird unter der Kraft der Ventilfeder 126 gegen den Ventilsitz 125 gedrückt, so dass das Rückschlagventil 120 geschlossen ist. Ein derart aufgebautes Absperrventil, welches im drucklosen Zustand des hydraulischen Schaltgeräts bzw. bei stehender Pumpe und damit fehlender hydraulischer Betätigung geschlossen ist, so dass der Schaltelementzylinder 107 hydraulisch von der restlichen hydraulischen Steuerungseinrichtung getrennt ist, wird nach diesem Verhalten als "normally closed" bezeichnet.

Soll nun ausgehend von den gezeigten Stellungen des Entsperrkörpers 119 und des Verschlusskörpers 121 eine Schaltung durchgeführt werden, bei welcher zum Schließen des Schaltelements 106 der Schaltelementzylinder 107 zu befüllen und mit einem Schaltelementdruck p_K zu beaufschlagen ist, strömt ein flüssiges Betriebsmedium, vorzugsweise Hydrauliköl, aus der Druckstelleinrichtung 103 in den Versorgungsdruckraum 133 und die Versorgungsbohrung 124. Der Steuerdruck p_S wird von der Druckstelleinrichtung 104 drucklos eingestellt, so dass der Entsperrkolben 111 in der neutralen Stellung unter der Kraft der Druckfeder 116 am Anschlag 117 verbleibt. Da das Rückschlagventil 120 geschlossen ist, steigt der Versorgungsdruck p_V in dem genannten Zweig so lange an, bis die Druckkraft, welche sich zum Produkt aus dem Versorgungsdruck p_V und der damit beaufschlagten Kreisfläche mit dem Durchmesser d_3 des Verschlusskörpers 121 errechnet, größer ist als die Kraft der Ventilfeder 126, welche den Verschlusskörper 121 gegen den Ventilsitz 125 drückt. Die Höhe des Versorgungsdrucks p_V wird von der Druckstelleinrichtung 103 eingestellt. Das Rückschlagventil 120 öffnet nun und der Schaltelementzylinder 107 wird durch den Schaltelementdruckraum 134 befüllt. Mittels der Druckstelleinrichtung 103 wird der Schaltelementdruck p_K auf die gewünschte Höhe eingeregelt, welcher dann den Schaltelementzylinder 107 beaufschlagt und das Schaltelement 106 zur Drehmomentübertragung schließt.

Der Schaltelementdruck p_K, der zu diesem Zeitpunkt dem Versorgungsdruck p_V entspricht, wirkt aus allen Raumrichtungen auf den kugelförmigen Verschlusskörper 121 ein, so dass die Druckkräfte ausgeglichen sind und dieser von der Kraft der Ventilfeder 126 in den Ventilsitz 125 gedrückt wird, womit der Verschlusskörper 121 die Verschlussstellung einnimmt, in welcher die hydraulische Verbindung zwischen der Druckstelleinrichtung 103 und dem Schaltelement 106 unterbrochen ist.

Damit ist der Schaltelementdruck p_K im Schaltelement 106, bzw. dem Schaltelementzylinder 107 eingesperrt und ist unabhängig vom Versorgungsdruck p_V, der nun reduziert oder theoretisch sogar drucklos gemacht werden kann. Ist der Versorgungsdruck p_V kleiner als der Schaltelementdruck p_K, wirkt eine Druckkraft, welche sich als Produkt der Differenz der beiden Drücke und der kreisförmigen Projektionsfläche mit dem Durchmesser d_3 errechnet, schließend, d.h. in Richtung des Ventilsitzes 125, auf den Verschlusskörper 121. Damit muss die Pumpe des Getriebes keinen Druck auf der Höhe des Schaltelementdrucks p_K mehr erzeugen, so dass der Antrieb der Pumpe nun eine geringere Leistungsaufnahme von der Antriebsleistung des Getriebes erfordert.

Soll das Schaltelement 106 nun geöffnet werden, was beispielsweise bei einer Änderung der Übersetzungsstufe, zu deren Darstellung dieses Schaltelement nicht mehr zu schließen ist, notwendig ist, muss das Rückschlagventil 120 entsperrt bzw. geöffnet werden, so dass der Schaltelementzylinder 107 mit der Druckstelleinrichtung 103 verbunden wird und durch diese in einen drucklosen Zustand versetzt werden kann.

Hierzu wird der Entsperrkolben 111 in dem Steuerdruckraum 131 von der Druckstelleinrichtung 104 mit dem Steuerdruck p_S beaufschlagt und in Richtung des Rückschlagventils 120 an den Entsperranschlag 118 bewegt. Entgegen der Kraft des Steuerdrucks p_S wirken die Kraft der Druckfeder 116 und - falls der Versorgungsdruck p_V nicht von der Druckstelleinrichtung 103 drucklos geregelt wurde - die Kraft aus dem Versorgungsdruck p_V, der auf das dem Rückschlagventil 120 zugewandten Ende des Stößels 113 mit dem Durchmesser d_2 wirkt.

Die Länge des Stößels 113 ist so gewählt, dass dieser bei der Bewegung des Entsperrkörpers 119 in die Entsperrstellung den Verschlusskörper 121 berührt, bevor der Entsperrkolben 111 am Entsperranschlag 118 anliegt. Erreicht der Entsperrkolben 111 den Entsperranschlag 118, hat der Stößel 113 den Verschlusskörper 121 in eine Öffnungsstellung bewegt und der Schaltelementzylinder 107 ist hydraulisch mit der Druckstelleinrichtung 103 verbunden. Beim Öffnen des Verschlusskörpers bzw. bei der Bewegung des Entsperrkolbens 111 an den Entsperranschlag 118 muss die Kraft des Steuerdrucks p_S die Kräfte der Druckfeder 116, der Ventilfeder 126 sowie die Druckkräfte des Versorgungsdrucks p_V und des Schaltelementdrucks p_K überwinden.

Wenn der von der Pumpe erzeugte Druck dem Niveau des bei abgesperrtem Schaltelement abgesenkten Versorgungsdrucks p_V entspricht, kann der Steuerdruck p_S nicht größer sein. Aus diesem Grunde wurde der Durchmesser d_1 des Entsperrkolbens 111 so gewählt, dass ein Steuerdruck p_S auf der Höhe des Versorgungsdrucks p_V ausreichend ist um den Entsperrkolben 111 entgegen der genannten Kräfte an den Entsperranschlag 118 zu verschieben.

Die Länge des Stößels 113 ist so gewählt, dass der Verschlusskörper 121 nicht am Ventilsitz 125 anliegen kann wenn sich der Entsperrkolben 111 am Entsperranschlag 118 in der der Entsperrstellung befindet. Das Rückschlagventil 120 ist damit entsperrt d.h. geöffnet. Der Durchmesser d_2 des Stößels 113 und der Durchmesser d_3 der Versorgungsbohrung 124 sind so gewählt, dass die sich aus der Differenz der Durchmesser d_2 und d_3 ergebende Ringfläche um den in die Versorgungsbohrung 124 ragenden Stößel 113 ausreichend groß ist, damit keine Drosselstelle entsteht, welche eine Befüllung des Schaltelementzylinders 107 aus der Druckstelleinrichtung 103 durch einen zu großen Durchflusswiderstand behindern könnte.

Der Entsperrkörper kann auch mehrstückig ausgestaltet sein, wobei der Stößel und der Entsperrkörper zwei Bauteile sind, die nicht miteinander verbunden sind. Dies ist möglich, da bei der Bewegung des Entsperrkolbens in die Entsperrstellung der Stößel, welcher in der der Stößelführung axial verschiebbar geführt ist, vom Entsperrkolben gegen den Verschlusskörper gedrückt wird. Wird der Entsperrkolben in die neutrale Stellung zurückbewegt, wird der Stößel von dem Verschlusskörper zum Entsperrkolben geschoben, wenn sich der Verschlusskörper gegen den Ventilsitz bewegt.

Bei einer weiteren Ausgestaltung des Absperrventils 101 wird auf die Ventilfeder 126 verzichtet. Dieses ist möglich, da nach dem Befüllen des Schaltelementzylinders 107 und dem Absenken des Versorgungsdrucks p_V das Betriebsmedium, vorzugsweise Ö, beim Zurückströmen vom Schaltelementzylinder 107 zur Versorgungsbohrung 124 durch einen dynamischen Effekt den Verschlusskörper gegen den Ventilsitz 125 bewegt. Sobald dieser den Ventilsitz 125 verschließt, wirkt der Schaltelementdruck p_K in axialer Projektion auf eine Kreisfläche des Verschlusskörpers 121 mit dem Durchmesser d_3 und drückt den Verschlusskörper 121 gegen den Ventilsitz. Vorteilhafterweise reduziert sich durch den Entfall der Ventilfeder die Baulänge des Rückschlagventils, wodurch das Absperrventil insgesamt kürzer wird. Als weiterer Vorteil öffnet das Rückschlagventil beim Befüllen des Schaltelements aus der Druckstelleinrichtung 103 bei einem geringeren Versorgungsdruck p_V.

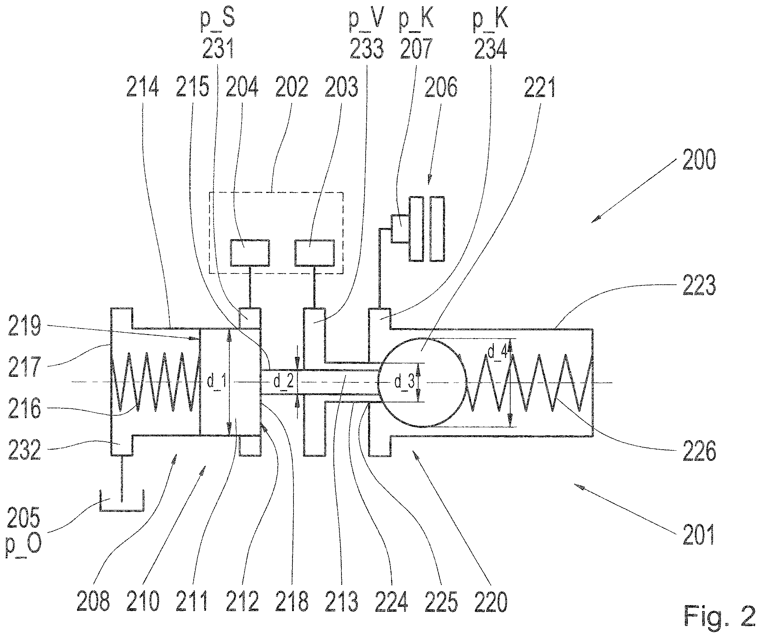

Fig. 2 zeigt eine schematische Darstellung einer hydraulischen Steuerungseinrichtung 200. Diese umfasst ein hydraulisches Schaltgerät 202, ein Schaltelement 206 und ein Absperrventil 201, welches hydraulisch zwischen dem hydraulischen Schaltgerät 202 und dem Schaltelement 206 angeordnet ist. Das hydraulische Schaltgerät 202 ist damit durch das Absperrventil 201 mit dem Schaltelement 206 verbindbar oder mittels diesem trennbar.

Das Absperrventil 201 ist als entsperrbares Rückschlagventil ausgebildet und umfasst eine Entsperreinrichtung 210 und ein Rückschlagventil 220. Das Rückschlagventil 220 lässt einen Durchfluss nur in einer Richtung zu und sperrt sich gegen eine Durchströmung aus der anderen Richtung. Mittels der Entsperreinrichtung 210 kann diese Sperrung aufgehoben werden, was nachfolgend auch als Entsperrung bezeichnet wird.

In einem beliebigen Gehäusekörper 208 ist eine Ventilbohrung ausgebildet, welche mehrere Bohrungsabschnitte mit unterschiedlichen Durchmessern aufweist. Die Bohrungsabschnitte werden nachfolgend als Entsperrzylinderbohrung 214, Stößelführung 215, Versorgungsbohrung 224 und Verschlusskörperbohrung 223 bezeichnet.

Im Bereich der Entsperreinrichtung 210 ist die Entsperrzylinderbohrung 214 ausgebildet welche einen Durchmesser d_1 aufweist, der größer ist als ein Durchmesser d_2 der Stößelführung 215, welche sich an die Entsperrzylinderbohrung 214 anschließt. Innerhalb der Entsperrzylinderbohrung 214 ist ein zylindrischer Entsperrkolben 211 axial zwischen zwei Anschlagpositionen 217 und 218, welches die Enden der Entsperrzylinderbohrung 214 sind, verschiebbar angeordnet. Eine Anschlagposition wird als Anschlag der neutralen Stellung 217 und eine zweite Anschlagposition als Entsperranschlag 218 bezeichnet. An einer Stirnfläche 212 des Entsperrkolbens 211 ist ein Stößel 213 angeordnet, welcher ebenfalls eine zylindrische Form aufweist. Der Stößel 213 und der Entsperrkolben 211 bilden einen Entsperrkörper 219. Dieser ist wie in dem in Fig.1 gezeigten Beispiel einstückig ausgeführt. Es ist aber auch möglich, dass Stößel und Entsperrkolben separate Bauteile sind, die miteinander wirkverbunden sind. Zwischen dem Entsperrkolben 211 und dem Anschlag der neutralen Stellung 217 ist eine Druckfeder 216 angeordnet, welche eine Kraft auf den Entsperrkolben 211 in Richtung des Entsperranschlags 218 ausübt.

An die Stößelführung 215 schließt sich eine Versorgungsbohrung 224 an, die einen Durchmesser d_3 aufweist, welcher größer als der Durchmesser d_2 der Stößelführung und damit auch der Durchmesser des Stößels 213 ist. Die Versorgungsbohrung 224 mündet in eine Verschlusskörperbohrung 223, welche einen Durchmesser d_4 aufweist, der größer ist als der Durchmesser d_3 der Versorgungsbohrung 224. Der Übergang von der Versorgungsbohrung 224 zur Verschlusskörperbohrung 223 bildet einen Ventilsitz 225.

Der Stößel 213 ist in der Stößelführung 215 mit einer Spielpassung geführt, welche zum einen eine weitgehend radialspielfreie Führung ermöglicht und zum anderen den Versorgungsdruckraum 233 gegen den Steuerdruckraum 231 abdichtet.

Innerhalb der Verschlusskörperbohrung 223 ist ein als Kugel ausgebildeter Verschlusskörper 221 zumindest zwischen dem Ventilsitz 225 und einem dem Ventilsitz 225 abgewandtem zweiten Ende des Verschlusskörperbohrung 223 axial beweglich angeordnet. Der Verschlusskörper 221 kann hierbei eine Verschlussstellung einnehmen, wenn er am Ventilsitz 225 anliegt und damit die Versorgungsbohrung 224 gegen die Verschlusskörperbohrung 223 verschließt. Damit ist das Rückschlagventil 220 als Sitzventil ausgebildet. Dieses hat gegenüber einem Schieberventil den Vorteil einer hohen Dichtigkeit, da aufgrund der theoretisch spaltfreien Anlage des kugeligen Verschlusskörpers 221 an den kreisförmigen Ventilsitz 225 keine Leckage auftreten kann. Zwischen dem Verschlusskörper 221 und dem zweiten Ende der Verschlusskörperbohrung 223 ist eine Ventilfeder 226 vorgespannt angeordnet, deren Kraft auf den Verschlusskörper 221 in Richtung des Ventilsitzes 225 wirkt.

Die Entsperrzylinderbohrung 214 ist an dem Ende, welches den Entsperranschlag 218 für die Entsperrstellung des Entsperrkörpers 219 darstellt, radial von einem Steuerdruckraum 231 durchdrungen, welcher mit einer Druckstelleinrichtung 204 des hydraulischen Schaltgeräts 202 verbunden ist. Die Druckstelleinrichtung 204 stellt einen Steuerdruck p_S ein, mittels welchem der Entsperrkolben 211 beaufschlagt und entgegen der Kraft der Druckfeder 226 in die Entsperrstellung an den Anschlag der neutralen Stellung 217 bewegt werden kann. An dem anderen Ende der Entsperrzylinderbohrung 214, welches den Anschlag der neutralen Stellung 217 darstellt, ist die Entsperrzylinderbohrung 214 radial von einem Druckraum 232 durchdrungen, der mit einem drucklosen Bereich 205 verbunden ist. Unter einem drucklosen Bereich ist hierbei ein Bereich zu verstehen, in welchem ein Umgebungsdruck p_0 oder ein Druck nahe dem Umgebungsdruck p_0 herrscht. Unter dem Begriff "drucklos" ist in dem Zusammenhang ein Druck zu verstehen, welcher wenigstens annähernd dem Umgebungsdruck p_0 der umgebenden Atmosphäre entspricht.

Die Versorgungsbohrung 224 ist radial von einem Versorgungsdruckraum 233 durchdrungen. Dieser ist mit einer Druckstelleinrichtung 203 des hydraulischen Schaltgeräts 202 verbunden, wobei mittels der Druckstelleinrichtung 203 ein Versorgungsdruck p_V eingestellt bzw. geregelt wird. Die Verschlusskörperbohrung 223 wird am Übergang dieser in die Versorgungsbohrung 224 radial von einem Schaltelementdruckraum 234 durchdrungen, welcher direkt mit einem Schaltelementzylinder 207 des Schaltelements 206 verbunden ist.

Die Darstellung zeigt die Elemente des Absperrventils 201 in den Stellungen, welche diese im drucklosen Zustand der hydraulischen Steuerungsvorrichtung einnehmen. Ein druckloser Zustand besteht beispielsweise beim Stillstand der Pumpe, wenn in zumindest im hydraulischen Schaltgerät 220 und auf der Druckseite der Pumpe wenigstens annähernd der Umgebungsdruck p_0 herrscht. Da der von der Druckstelleinrichtung 204 eingestellte Steuerdruck p_S dann auch drucklos ist, wird der Entsperrkörper 219 unter der Wirkung der vorgespannten Druckfeder 216 an den Entsperranschlag 218 in die Entsperrstellung gedrückt. Der Stößel 213 ragt in der Entsperrstellung des Entsperrkörpers 211 durch die Versorgungsbohrung 224 und den Ventilsitz 225 in die Verschlusskörperbohrung 223 hinein und bildet dort einen Anschlag, gegen den der kugelförmige Verschlusskörper 221 von der Kraft der Ventilfeder 226 gedrückt wird, so dass dieser nicht am Ventilsitz 225 anliegen kann und somit das Rückschlagventil 220 geöffnet ist. Damit ist der Schaltelementzylinder 207 mit der restlichen hydraulischen Steuerungseinrichtung 201 bzw. dem hydraulischen Schaltgerät 202 verbunden und folglich auch drucklos. Ein derart aufgebautes Absperrventil, welches im drucklosen Zustand des hydraulischen Schaltgeräts bzw. bei stehender Pumpe geöffnet ist, wird als "normally open" bezeichnet.

Soll nun ausgehend von den gezeigten Stellungen des Entsperrkörpers 219 und des Verschlusskörpers 221 eine Schaltung durchgeführt werden, bei welcher zum Schließen des Schaltelements 206 der Schaltelementzylinder 207 zu befüllen und mit einem Schaltelementdruck p_K zu beaufschlagen ist, strömt ein flüssiges Betriebsmedium, vorzugsweise Hydrauliköl, aus der Druckstelleinrichtung 203 in den Versorgungsdruckraum 233 und die Versorgungsbohrung 224. Der Steuerdruck p_S wird von der Druckstelleinrichtung 204 zumindest so hoch eingestellt, dass dieser den Entsperrkolben 211 entgegen der Kraft der Druckfeder 216 in die neutrale Stellung an dem Anschlag 217 hält. Da das Rückschlagventil 220 geschlossen ist, steigt der Versorgungsdruck p_V in dem Versorgungsdruckraum 233 und der Versorgungsbohrung 224 so lange an, bis die Druckkraft, welche sich zum Produkt aus dem Versorgungsdruck p_V und der damit beaufschlagten Kreisfläche mit dem Durchmesser d_3 des Verschlusskörpers 221 errechnet, größer ist als die Kraft der Ventilfeder 226, welche den Verschlusskörper 221 gegen den Ventilsitz 225 drückt. Die Höhe des Versorgungsdrucks p_V wird von der Druckstelleinrichtung 203 eingestellt. Das Rückschlagventil 220 öffnet nun und der Schaltelementzylinder 207 wird durch den Schaltelementdruckraum 234 befüllt. Mittels der Druckstelleinrichtung 203 wird der Schaltelementdruck p_K auf die gewünschte Höhe eingeregelt, welcher dann den Schaltelementzylinder 207 beaufschlagt und das Schaltelement 206 zur Drehmomentübertragung schließt.

Der Schaltelementdruck p_K, der zu diesem Zeitpunkt dem Versorgungsdruck p_V entspricht, wirkt aus allen Raumrichtungen auf den kugelförmigen Verschlusskörper 221 ein, so dass die Druckkräfte ausgeglichen sind und dieser von der Kraft der Ventilfeder 226 in den Ventilsitz 225 gedrückt wird, womit der Verschlusskörper 221 die Verschlussstellung einnimmt, in welcher die hydraulische Verbindung zwischen der Druckstelleinrichtung 203 und dem Schaltelement 206 unterbrochen ist.

Damit ist der Schaltelementdruck p_K im Schaltelement 206, bzw. dem Schaltelementzylinder 207 eingesperrt und unabhängig vom Versorgungsdruck p_V, der nun reduziert werden kann, aber einen Mindestwert nicht unterschreiten darf. Dieser Mindestwert wird dadurch bestimmt, dass immer noch ein Steuerdruck p_S einstellbar sein muss, der so hoch ist, dass dieser in Verbindung mit der durch den Durchmesser d_1 bestimmten Stirnfläche 212 den Entsperrkörper 211 entgegen der Kraft der Druckfeder 216 in der neutralen Stellung am Anschlag 217 hält, da ansonsten das Rückschlagventil 220 entsperrt wird. Damit würde der Schaltelementzylinder 207 mit dem hydraulischen Schaltgerät 202 verbunden und der Schaltelementdruck p_K würde auf den reduzierten Versorgungsdruck p_V absinken, was zu einem unerwünschten Öffnen des Schaltelements 106 führen würde.

Ist der Versorgungsdruck p_V kleiner als der Schaltelementdruck p_K, wirkt eine Druckkraft, welche sich als Produkt der Differenz der beiden Drücke und der kreisförmigen Projektionsfläche mit dem Durchmesser d_3 errechnet, schließend, d.h. die resultierende Druckkraft wirkt auf den Verschlusskörper 221 in Richtung des Ventilsitzes 225. Damit muss die Pumpe des Getriebes keinen Druck auf der Höhe des Schaltelementdrucks p_K mehr erzeugen, so dass der Antrieb der Pumpe nun eine geringere Leistungsaufnahme, entsprechend der Höhe des noch zu erzeugenden Versorgungsdrucks p_V, von der Antriebsleistung welche dem Getriebe zugeführt wird erfordert.

Soll das Schaltelement 206 nun geöffnet werden, was beispielsweise bei einer Änderung der Übersetzungsstufe, zu deren Darstellung dieses Schaltelement nicht mehr zu schließen ist, notwendig ist, muss das Rückschlagventil 220 entsperrt bzw. geöffnet werden, so dass der Schaltelementzylinder 207 mit der Druckstelleinrichtung 203 verbunden wird und durch diese in einen drucklosen Zustand versetzt werden kann.

Hierzu wird mittels der Druckstelleinrichtung 204 der in dem Steuerdruckraum 231 anstehende Steuerdruck p_S drucklos gemacht, d.h. auf den Umgebungsdruck p_0 abgesenkt, so dass die Kraft der Druckfeder 216 den Entsperrkörper 219 in die Entsperrstellung bewegt und damit das Rückschlagventil 220 öffnet. Es wäre auch denkbar den Steuerdruck p_S nicht drucklos zu machen, sondern auf einen Druck zu reduzieren, welcher eine geringere Kraft auf den Entsperrkolben 211 ausübt als die Kraft der Druckfeder 216.

Die Länge des Stößels 213 ist so gewählt, dass der Verschlusskörper 221 nicht am Ventilsitz 225 anliegen kann wenn sich der Entsperrkolben 211 am Entsperranschlag 218 in der der Entsperrstellung befindet. Das Rückschlagventil 220 ist damit entsperrt d.h. geöffnet. Der Durchmesser d_2 des Stößels 213 und der Durchmesser d_3 der Versorgungsbohrung 224 sind so gewählt, dass die sich aus der Differenz der Durchmesser d_2 und d_3 ergebende Ringfläche um den in die Versorgungsbohrung 224 ragenden Stößel 213 ausreichend groß ist, damit keine Drosselstelle entsteht, welche eine Befüllung des Schaltelementzylinders 207 aus der Druckstelleinrichtung 203 durch einen zu großen Durchflusswiderstand behindern könnte.

Die Druckfeder 216 ist so ausgelegt, dass deren Vorspannkraft bei maximal ausgelenktem Entsperrkolben 211, d.h. wenn sich dieser in der Entsperrstellung am Entsperranschlag 218 befindet, ausreichend ist, um den Verschlusskörper 221 entgegen der auf diesen wirkenden resultierenden Druckkraft aus Schaltelementdruck p_K und Versorgungsdruck p_S vom Ventilsitz 225 abzuheben und in eine Öffnungsstellung zu verschieben.

Bei einer weiteren Ausgestaltung des Absperrventils 201 wird auf die Ventilfeder 226 verzichtet. Dieses ist möglich, da nach dem Befüllen des Schaltelementzylinders 207 und dem Absenken des Versorgungsdrucks p_V das Betriebsmedium, vorzugsweise Ö, beim Zurückströmen vom Schaltelementzylinder 207 zur Versorgungsbohrung 224 durch einen dynamischen Effekt den Verschlusskörper 221 gegen den Ventilsitz 225 bewegt. Sobald dieser den Ventilsitz 225 verschließt, wirkt der der Schaltelementdruck p_K in axialer Projektion auf eine Kreisfläche des Verschlusskörpers 221 mit dem Durchmesser d_3 und drückt den Verschlusskörper 221 gegen den Ventilsitz 225. Die Vorteile des Entfalls der Ventilfeder wurden bereits unter Fig.1 genannt.

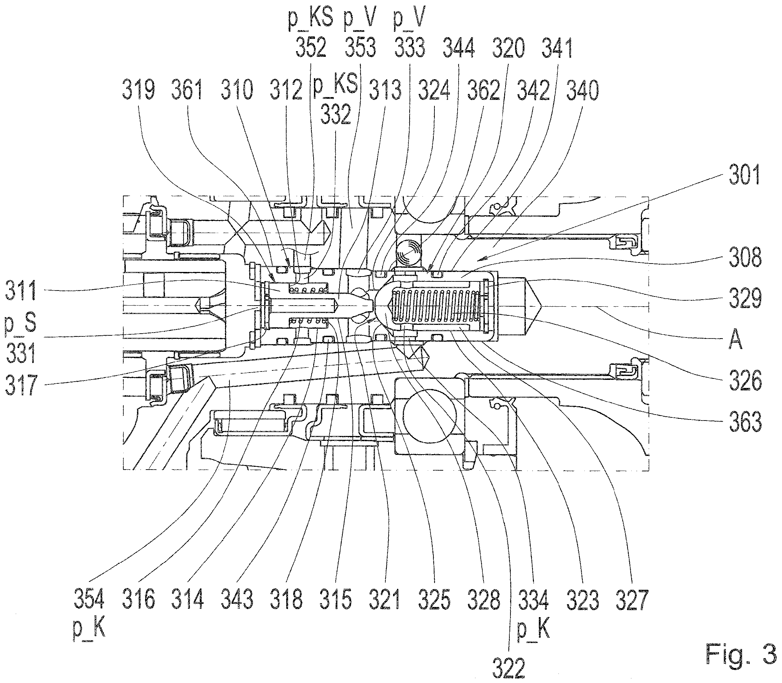

Fig.3 zeigt einen Längsschnitt einer Ausgestaltung eines Absperrventils 301, welches in einer Welle 340 eines Getriebes angeordnet ist. Das Absperrventil 301 umfasst eine Entsperreinrichtung 310 und ein Rückschlagventil 320. Das Absperrventil 301 entspricht schematisch dem Absperrventil 101 aus Fig.1 und ist von seiner Wirkungsweise her ebenso "normally closed".

Die Entsperreinrichtung 310 umfasst einen Entsperrkörper 319 und eine Druckfeder 316. Der Entsperrkörper 319 ist einstückig ausgebildet und weist einen Entsperrkolben 311 und einen Stößel 313 auf, welche konzentrisch zueinander sind. Der Entsperrkolben 311 ist in einer Entsperrzylinderbohrung 314 und der Stößel 313 in einer Stößelführung 315 axial verschiebbar geführt. In die Entsperrzylinderbohrung 314 mündet an deren Ende, welches dem Rückschlagventil 320 abgewandt ist und den Anschlag der neutralen Stellung 317 bildet, ein Steuerdruckanschluss 331. Die Entsperrzylinderbohrung 314 und die Stößelführung 315 sind in einem Gehäusekörper 308 ausgebildet. Zu einem anderen Ende 318 der Entsperrzylinderbohrung 314 hin, welche dem Rückschlagventil 320 zugewandt ist, mündet in radialer Richtung ein Kühl- und Schmierölanschluss 332 in die Entsperrzylinderbohrung 314.

Zwischen dem Entsperrkolben 311 und dem Entsperranschlag 318 ist die Druckfeder 316 vorgespannt und konzentrisch um den Stößel 313 gewunden angeordnet. Im Gegensatz zum Absperrventil 101 der idealisierten schematischen Darstellung in Fig.1 liegt der Entsperrkolben 311 in der Entsperrstellung nicht selbst an dem Ende 318 als Entsperranschlag an, sondern an der auf Block gegangenen Druckfeder 316, d.h. in der Entsperrstellung liegen die Windungen der Druckfeder 316 aneinander an.
Der Stößel 313 ragt in eine in dem Gehäusekörper 308 ausgebildete Versorgungsbohrung 324, in welche radial ein ebenfalls im Gehäusekörper 308 ausgebildeter Versorgungsdruckanschluss 333 mündet, durch welchen das unter dem Versorgungsdruck p_V stehende Betriebsmedium aus einer nicht gezeigten Druckstelleinrichtung durch einen in der Welle 340 ausgebildeten Versorgungskanal 353 in das Rückschlagventil 320 gelangt. Anschließend an die Versorgungsbohrung 324 ist in dem Gehäusekörper 308 eine Verschlusskörperbohrung 323 ausgebildet, in welcher der Verschlusskörper 321 des Rückschlagventils 320 axial verschiebbar angeordnet ist. Der Übergang von der engeren Versorgungsbohrung 324 in die Verschlusskörperbohrung 323 vollzieht sich in einem konischen Ventilsitz 325.

Die Außenfläche des Gehäusekörpers 308 ist zylindrisch, wobei dieser im Ausgestaltungsbeispiel von Fig.3 mehrere zylindrische Gehäusekörperabschnitte (361, 362, 363) mit unterschiedlichen Außendurchmessern aufweist. Grundsätzlich wäre es aber auch möglich, dass die zylindrische Außenkontur des Gehäusekörpers nur einen Außendurchmesser aufweist.

Der Verschlusskörper 321 ist als Sitzkolben ausgebildet, welcher einen hohlzylindrischen Kolbenabschnitt 327 und einen sphärischen Kolbenabschnitt 328 aufweist. Der sphärische Kolbenabschnitt ist dem Ventilsitz 325 zugewandt und liegt in geschlossener Stellung des Rückschlagventils 320 am konischen Ventilsitz 325 an. Radial mündet ein ebenfalls im Gehäusekörper 308 ausgebildeter Schaltelementanschluss 334 in die Verschlusskörperbohrung 323. Der Schaltelementanschluss 334 führt durch einen in der Welle 340 ausgebildeten Schaltelementkanal 354 zu einem nicht gezeigten Schaltelement.

Innerhalb des hohlzylindrischen Kolbenabschnitts 327 ist eine Ventilfeder 326 vorgespannt zwischen dem Verschlusskörper 321 und einem Rückschlagventilverschluss 329 angeordnet. Durch radial gerichtete Fenster 322 im Kolbenabschnitt 327 ist das Innere des Verschlusskörpers 321 durch den Schaltelementanschluss 334 und den Schaltelementkanal 354 mit dem Schaltelement verbunden, so dass der im Schaltelement herrschende Schaltelementdruck p_K auf den Verschlusskörper 321 in Richtung des Ventilsitzes 325 wirken kann.

Aufgrund der Ausgestaltung des Absperrventils 301 mit dem Gehäusekörper 308, bzw. der abgestuften oder durchgängig zylindrischen Außenkontur des Gehäusekörpers 308, und aller innerhalb des Gehäusekörpers 308 angeordneten Bauteile kann das Absperrventil 301 als geschlossene Einheit in den jeweiligen Einbauort, in diesem Falle in die Welle 340 in eine dafür vorgesehene, einfach herstellbare Ventilaufnahmebohrung 341 eingesetzt werden. Dies vereinfacht die Montage und ermöglicht es, ein einheitliches Absperrventil an unterschiedlichen Orten anordnen zu können. Im vorliegenden Falle sind der Entsperrkörper 319 und der Verschlusskörper 321 konzentrisch zum Gehäusekörper 308 angeordnet. Der Gehäusekörper 308 bzw. das Absperrventil 301 als Ganzes ist konzentrisch zu einer Wellenachse A der Welle 340 in dieser angeordnet.

Zur Vermeidung von Leckagen sind zwischen den hydraulischen Übergabestellen vom Absperrventil 301 zur Welle 340 Dichtelemente vorgesehen, welche vorzugsweise als Dichtringe 342, 343, 344 ausgebildet sind. So ist zwischen der Stelle, an welcher der Kühlölanschluss 332 in den Kühlölkanal 352 übergeht und der Stelle, an welcher der Versorgungsdruckanschluss 333 in den Versorgungskanal 353 übergeht ein Dichtring 343 angeordnet. Zwischen der Stelle, an welcher der Versorgungsdruckanschluss 333 in den Versorgungskanal 353 übergeht und der Stelle, an welcher der Schaltelementanschluss 334 in den Schaltelementkanal 354 übergeht, ist ein Dichtring 344 angeordnet, so dass Leckageströme zwischen einzelnen Anschlüssen aufgrund von Druckunterschieden vermieden werden. Zwischen der Stelle, an welcher der Schaltelementanschluss 334 in den Schaltelementkanal 354 übergeht, und dem Ende des Absperrventils 301, an welchem der Rückschlagventilverschluss 329 angeordnet ist der Dichtring 342 angeordnet, damit das unter dem Schaltelementdruck p_K stehende Betriebsmedium nicht entweichen kann, was zu einem unerwünschten Absinken des Schaltelementdrucks p_K führen würde. Die Dichtringe 342, 343, und 344 sind üblicherweise aus gummielastischem Material hergestellt.

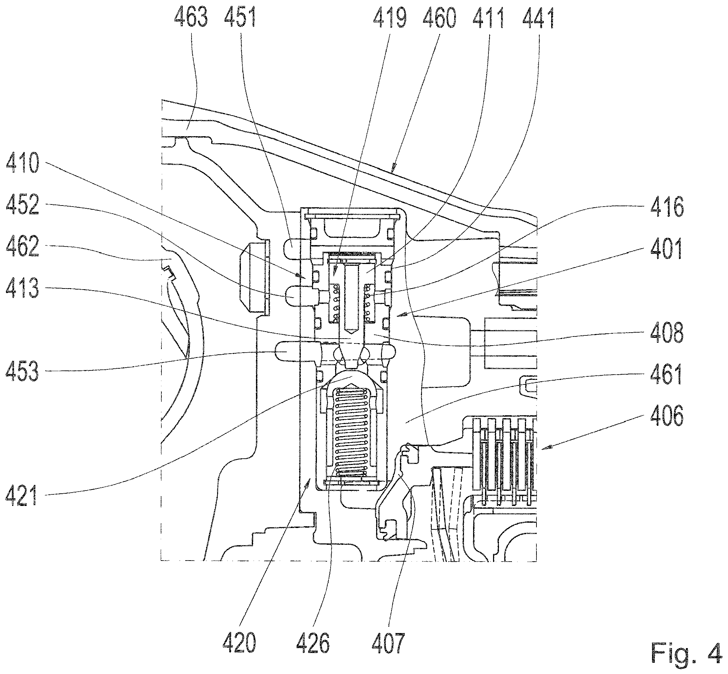

Fig.4 zeigt in einem Teil eines Längsschnitts durch ein Getriebe einen weiteren Einbauort eines Absperrventils 401, welches im Wesentlichen gleich aufgebaut ist wie das Absperrventil 301 in Fig.1. Das ebenfalls im Längsschnitt dargestellte Absperrventil 401 ist in einer Zwischenplatte 461 eines mehrteiligen Getriebegehäuses 460 in einer Ventilaufnahmebohrung 441 im Bereich einer vom Getriebegehäuse 460 umfassten Wandlerglocke 463 angeordnet. Grundsätzlich könnte die Ventilaufnahmebohrung auch in jedem anderen Teil des Getriebegehäuses ausgebildet sin, insofern diese dort fertigbar wäre bzw. in diesem Teil genügend Material vorhanden wäre. Von einem hydrodynamischen Drehmomentwandler 462 ist nur ein Teilschnitt sichtbar.

Ein Schaltelement 406 mit einem Schaltelementzylinder 407, welcher von dem Absperrventil 401 abzusperren ist, ist diesem direkt benachbart angeordnet. Das Absperrventil 401 umfasst ähnlich dem Absperrventil 301 in Fig.3 einen Gehäusekörper 408, in welchem eine Entsperreinrichtung 410 und ein Rückschlagventil 420 ausgebildet sind. Die Entsperreinrichtung 410 umfasst einen Entsperrkörper 419, welcher eine Druckfeder 416, einen Entsperrkolben 411 und einen Stößel 413 aufweist. Das Rückschlagventil 420 umfasst einen Verschlusskörper 421 und eine Ventilfeder 426. In der Zwischenplatte 461 sind Kanäle und Anschlüsse des Absperrventils 401 ausgebildet, von welchen ein Steuerdruckkanal 451, ein Kühlölkanal 452 und ein Versorgungskanal 453 dargestellt sind. Das derart modular aufgebaute Absperrventil 401 kann vorteilhafterweise an unterschiedlichen Stellen eines Getriebes bzw. des Getriebegehäuses angeordnet werden, ohne dass eine Umgestaltung der inneren Elemente von Entsperreinrichtung und Rückschlagventil, nämlich des Entsperrkörpers und des Verschlusskörpers, erforderlich ist. Unter einem modularen Aufbau ist hierbei zu verstehen, dass die Schnittstelle, nämlich die Ventilaufnahmebohrung 441, in welche das Absperrventil 401 in ein Gehäuse eingesetzt wird, immer gleich ist und von der äußeren Form des Gehäusekörpers 408 vorgegeben wird. Das Absperrventil 401 kann im Inneren des Gehäusekörpers 408 unabhängig vom Einbauort immer gleich gestaltet sein, ebenso die bewegten Teile der Entsperreinrichtung 410 und des Rückschlagventils 420. Das Absperrventil 401 kann zudem vormontiert werden und komplett montiert eingesetzt werden. Durch die Verwendung von Gleichteilen kann ist ein derartiges Absperrventil kostengünstig herstellbar.

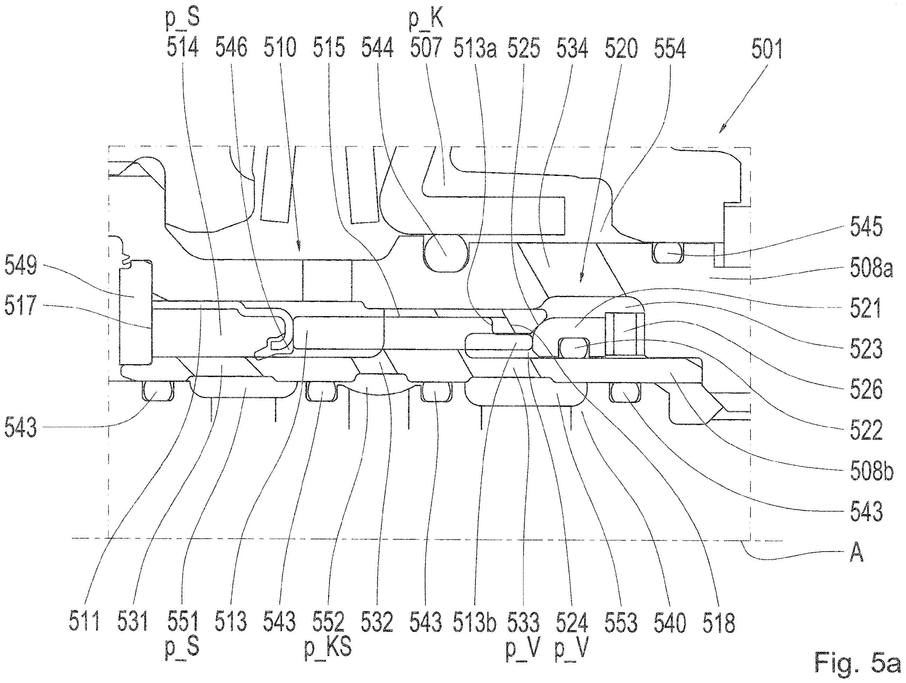

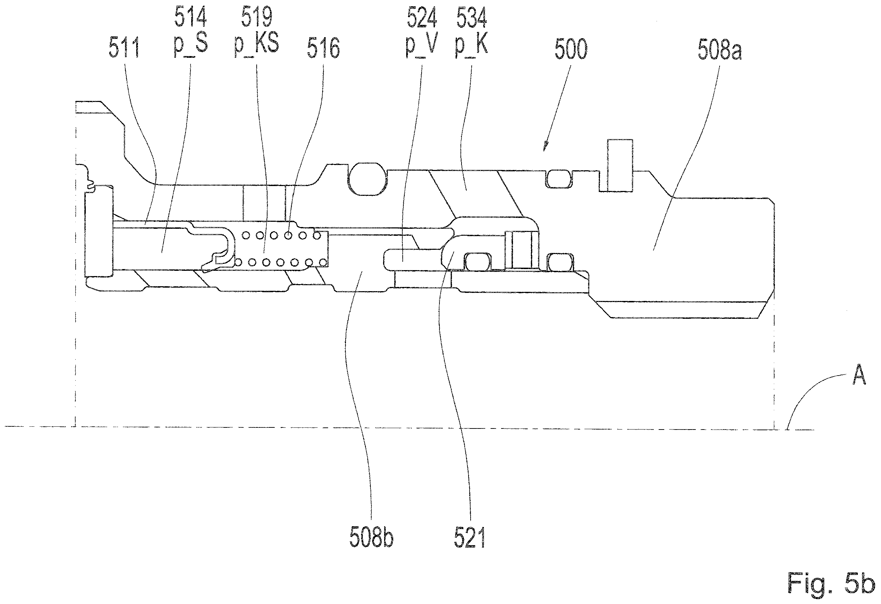

Fig.5a und 5b zeigen ein Absperrventil 501 als weitere Ausgestaltung. Die Besonderheit hierbei ist, dass dieses im vorliegenden Beispiel um eine Welle 540 herum, konzentrisch zu einer Wellenachse A der Welle 540, angeordnet ist. In den Fig.5a und 5b ist jeweils ein Längsschnitt des selben Absperrventils 501 gezeigt, wobei die beiden Längsschnitte über dem Umfang des Absperrventils in einem bestimmten Winkel zueinander stehen und hier jeweils in die Zeichenebene gedreht wurden.

Fig.5a zeigt das Absperrventil 501, eine von diesem umschlossene Welle 540 und einen Schaltelementzylinder 507 eines radial außerhalb des Absperrventils 501 angeordneten Schaltelements. Das Absperrventil 501 umfasst eine Entsperreinrichtung 510 und ein Rückschlagventil 520. Die Entsperreinrichtung 510 umfasst einen ringförmigen Entsperrkolben 511 und mehrere Stößel 513, welche über dem Umfang verteilt sind. An dem Entsperrkolben 511 ist ein Dichtelement 546 angeordnet.

Der Entsperrkolben 511 ist in einem hohlzylindrischen Entsperrkolbenraum 514, welcher zwischen einem äußeren Gehäusekörper 508a und einem inneren Gehäusekörper 508b ausgebildet ist, axial, d.h. längs der Wellenachse A, verschiebbar angeordnet. Der äußere Gehäusekörper 508a ist hierbei radial außerhalb des ringförmigen Entsperrkolbens 511 und der innere Gehäusekörper 508b im Wesentlichen innerhalb des Entsperrkolbens 511 angeordnet. Der Stößel 513 ist in einer im Gehäusekörper 508b ausgebildeten Stößelführung 515 axial verschiebbar angeordnet und nicht mit dem Entsperrkolben 511 verbunden. Der Entsperrkolben 511 und der Stößel 513 bilden damit einen zweiteiligen Entsperrkörper 519. Der Stößel 513 weist einen Anschlagabsatz 513a und eine Stößelspitze 513b auf. Eine Begrenzung des Entsperrkolbenraumes 514 an einem Ende des Absperrventils 501 ist ein Abschlussstück 549, welches den Entsperrkolbenraum 514 verschließt und dessen dem Entsperrkolben 511 zugewandte Seite einen Anschlag der neutralen Stellung 517 bildet.

Fig.5b zeigt eine von mehreren Druckfedern 516, welche um den Umfang verteilt sind, und vorgespannt zwischen dem Entsperrkolben 511 und dem inneren Gehäusekörper 508b angeordnet sind. Im drucklosen Zustand wird der Entsperrkolben 511 von den Druckfedern 516 gegen das Abschlussstück 549 und damit gegen den Anschlag 517 der neutralen Stellung gedrückt.

Der Entsperrkolben 511 ist in dieser Ausführung als Blechring ausgebildet, der im Profil eine Form aufweist, die radial nach innen zum inneren Gehäusekörper 508b und axial zum Anschlag 517 offen ist und axial zum Stößel 513 und radial nach außen hin zum äußeren Gehäusekörper 508a geschlossen ist. Im inneren Gehäusekörper 508b ist ein Durchlass ausgebildet, welcher mit einem in der Welle 540 ausgebildeten Steuerdruckkanal 551 verbunden ist, so dass das Betriebsmedium aus einer nicht dargestellten Druckstelleinrichtung zur Einstellung des Steuerdrucks p_S in einen im Entsperrkolben 511 ausgebildeten Steuerdruckraum 531 gelangen kann. Im Bereich des Stößels 513 ist der innere Gehäusekörper 508b radial nach innen durch einen Kühlölanschluss 532 mit einem in der Welle 540 ausgebildeten Kühlölkanal 552 verbunden, durch welchen Kühl- und Schmieröl aus einem Bereich einer nicht dargestellten hydraulischen Steuerungseinrichtung strömt.

Damit keine Leckage vom Steuerdruckraum 531 zum Kühlölkanal 552 gelangen kann, weist der Entsperrkolben 511 ein Dichtelement 546 auf, welches radial nach innen zwischen dem Entsperrkolben 511 und dem inneren Gehäusekörper 508b abdichtet. In dem inneren Gehäusekörper 508b ist weiterhin ein Entsperranschlag 518 und ein kegeliger Ventilsitz 525 ausgebildet.

Zwischen dem Ventilsitz 525 des inneren Gehäusekörpers 508b und dem äußeren Gehäusekörper 508a ist ein Verschlusskörperraum 523 ausgebildet, innerhalb dessen ein ringförmiger Verschlusskörper 521 zwischen einer Verschlussstellung und mindestens einer Öffnungsstellung axial verschiebbar angeordnet ist. Benachbart zum Verschlusskörperraum 523 ist auf der anderen Seite des Ventilsitzes 525 im inneren Gehäusekörper 508b ein Zulaufkanal 524 ausgebildet, welcher mit einem Versorgungsdruckanschluss 533 verbunden ist, der radial nach innen mit einem in der Welle 540 ausgebildeten Versorgungskanal 553 verbunden ist.

Der Versorgungsdruckanschluss 533 ist aus einer nicht dargestellten Druckstelleinrichtung mit dem Versorgungsdruck p_V beaufschlagbar. Der innere Gehäusekörper 508b weist mehrere Versorgungsdruckanschlüsse 533 auf, die auf dem Umfang verteilt sind. So zeigt Fig.5b eine Schnittebene, in welcher zwar der Zulaufkanal 524, aber nicht der mit diesem verbundene Versorgungsdruckanschluss 533 zu sehen ist. Der Verschlusskörper 521 ist innerhalb des Verschlusskörperraums 523 axial zwischen dem Ventilsitz 525 und dem äußeren Gehäusekörper, bzw. einer zwischen dem Verschlusskörper 521 und dem äußeren Gehäusekörper 508a angeordneten vorgespannten ringförmigen Ventilfeder 526 verschiebbar. Der Verschlusskörperraum 523 ist durch einen Schaltelementanschluss 534, der im äußeren Gehäusekörper 508a ausgebildet ist und radial nach außen führt mit einem Schaltelementzylinder 507 verbunden, welcher im betätigten Zustand des nicht dargestellten Schaltelements von dem Schaltelementdruck p_K beaufschlagt wird. Der Schaltelementzylinder 507 ist mittels zweier Dichtringe 544 und 545 abgedichtet.

Im drucklosen Zustand der hydraulischen Steuerungseinrichtung, bzw. bei Stillstand der Pumpe entsprechen sowohl der Versorgungsdruck p_V, der Steuerdruck p_S als auch der Kühl-/Schmierdruck p_KS dem Umgebungsdruck, so dass unter der Wirkung der Druckfedern 516 der Entsperrkolben 511 am Anschlag 517 in der neutralen Stellung befindlich ist und der Verschlusskörper 521 unter der Wirkung der Ventilfeder 526 und evtl. des eingeschlossenen Schaltelementdrucks p_K am Ventilsitz 525 anliegt und das nicht gezeigte Schaltelement absperrt. Damit ist die in Fig.5a und 5b gezeigte Ausgestaltung des Absperrventils 501 als "normally closed" ausgeführt.

Eine Koppelung zwischen dem Entsperrkolben 511 und dem Stößel 513 ist nicht erforderlich, da bei einer Beaufschlagung des Entsperrkolbens 511 dieser den Stößel 513 bzw. dessen Stößelspitze 513b gegen das Verschlusselement 521 drückt und dieses vom Ventilsitz 525 abhebt. Der Entsperrkolben 511 wird unter der Wirkung des Steuerdrucks p_S so weit mit dem Stößel 513 und damit dem vom Stößel bewegten Verschlusskörper 531 in Richtung dessen Öffnungsstellung bewegt, bis der Anschlagabsatz 513a an dem Entsperranschlag 518 anliegt.

Soll das Rückschlagventil 520 wieder geschlossen werden, wird der Steuerdruck p_S verringert, wodurch der Entsperrkolben 511 von den Druckfedern 516 in die neutrale Stellung verschoben wird. Da ohne die Kraft des Steuerdrucks p_S das Verschlusselement 521 sich wieder unter der Wirkung zumindest der Ventilfeder 526 in die Verschlussstellung bewegt, wird der Stößel 513 vom Verschlusselement 521 zurück zum Entsperrkolben 511 geschoben.

Der ringförmige Verschlusskörper 521 ist axial verschiebbar am radial äußeren Umfang des inneren Gehäusekörpers 508b geführt, wobei zwischen den Kontaktflächen vom Verschlusskörper 521 mit dem inneren Gehäusekörper 508b eine Spielpassung besteht. Aufgrund dieser Führung bzw. der ringförmigen Gestaltung des Verschlusskörpers 521 handelt es sich bei dem Rückschlagventil 520 nicht um ein reines Sitzventil, sondern um eine Kombination eines Sitz- und eines Schieberventils. Der Ventilsitz 525 hat nur eine dichtende Flanke, die Kontakt mit dem abgerundeten Ende des Verschlusskörpers 521 hat. Zur Abdichtung der inneren Form des Verschlusskörpers 511 ist ein Dichtring 522 erforderlich.

Steuerdruck p_S, Versorgungsdruck p_V und Kühl-/Schmierdruck p_KS werden dem Absperrventil 501 aus dem Steuerdruckkanal 551, dem Kühlölkanal 552 und dem Versorgungsdruckkanal 553 der Welle 540 zugeführt. Zwischen der Welle 540 und einer Innenkontur des inneren Gehäusekörpers 508b sind Dichtringe 543 angeordnet, mittels welchen die drei Kanäle gegeneinander abgedichtet sind.

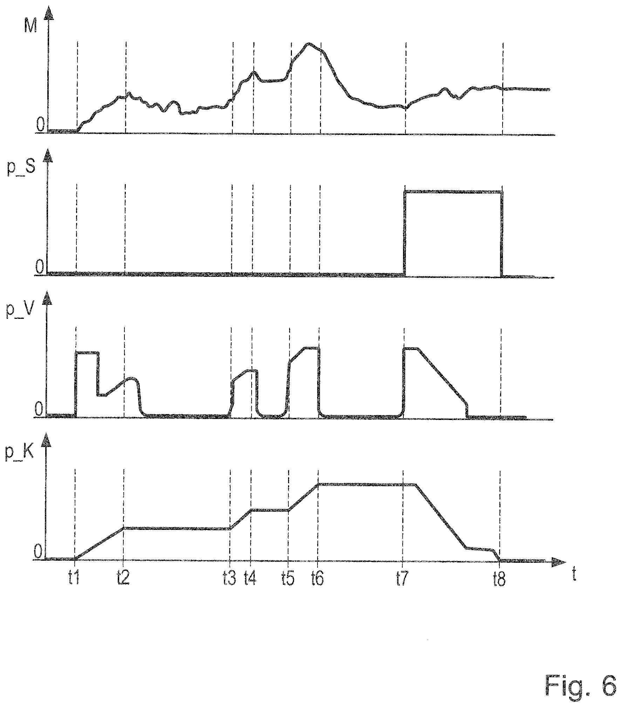

Fig.6 zeigt in einem Diagramm die Verläufe eines Motormomentes M welches von einer Antriebsmaschine eines Getriebes erzeugt wird an einem Schaltelement, des Steuerdrucks p_S, des Versorgungsdrucks p_V und des Schaltelementdrucks p_K über der Zeit t bei einem Schaltvorgang eines Schaltelements, vor welchem ein Absperrventil, das nach dem Prinzip "normally closed" arbeitet angeordnet ist. Ausführungsbeispiele zu einem solchen Absperrventil wurden in Fig.1, 3, 4, 5a und 5b beschrieben.

Zu einem Zeitpunkt t0 ist ein reibschlüssiges Schaltelement noch offen, da der Schaltelementzylinder drucklos bzw. der Schaltelementdruck p_K gleich Null ist wie auch das anliegende Motormoment M. Der von einer Druckstelleinrichtung in einem hydraulischen Schaltgerät einstellbare Versorgungsdruck p_V ist ebenfalls drucklos. Der Entsperrkörper befindet sich in der neutralen Stellung, da der Steuerdruck p_S gleich Null ist.

Zum Zeitpunkt t1 steigt das Motormoment M an und es ergeht ein Schaltbefehl das Schaltelement zu schließen. In der Druckstelleinrichtung des hydraulischen Schaltgeräts wird der Versorgungsdruck p_V auf ein Druckniveau zur Schnellfüllung angehoben. Der Schaltelementzylinder wird durch das Rückschlagventil des Absperrventils befüllt. Hieraus resultiert ein dem Verlauf des Moments M angepasster Anstieg des Schaltelementdrucks p_K.

Ab dem Zeitpunkt t2 sinkt bzw. stagniert das Motormoment M. Der eingestellte Schaltelementdruck p_K ist ausreichend zur Momentübertragung und der Versorgungsdruck p_V kann abgesenkt werden, da das Rückschlagventil ein Absinken des eingeschlossenen Schaltelementdrucks p_K nicht zulässt.

Zum Zeitpunkt t3 steigt das Motormoment M an, was eine Anhebung des Schaltelementdrucks p_K erfordert. Hierzu wird der Versorgungsdruck p_V sprungartig auf das Niveau vor dessen Absenkung erhöht und dem Moment entsprechend nachgeführt, indem dieser über den eingeschlossenen Schaltelementdruck p_K angehoben wird. Der Verschlusskörper des Rückschlagventil wird dadurch entgegen der Kraft der Ventilfeder und des Schaltelementdrucks p_K geöffnet und der Schaltelementdruck p_K erhöht sich.

Zum Zeitpunkt t4 sinkt bzw. stagniert das Motormoment M wieder, so dass der Versorgungsdruck p_V und damit der von der Pumpe erzeugte Druck vorteilhafterweise abgesenkt werden kann. Der im Schaltelementzylinder eingeschlossene Schaltelementdruck p_K ist ausreichend für die Übertragung des anliegenden Motomoments M.

Eine abermalige Erhöhung des Motormoments M zum Zeitpunkt t5 erfordert wieder ein Anheben des Versorgungsdrucks p_V in gleicher Weise wie zum Zeitpunkt t3. Der Schaltelementdruck p_K erhöht sich entsprechend und bleibt ab dem Zeitpunkt t6 bei sinkendem Motormoment M konstant auf seinem erreichten Niveau.

Zum Zeitpunkt t7 ergeht ein Schaltbefehl, das Schaltelement zu öffnen, wie dies beispielsweise bei einem Wechsel der Übersetzungsstufe erforderlich ist. Hierzu ist der Schaltelementdruck p_K auf Null abzusenken bzw. drucklos zu machen, indem das Absperrventil entsperrt wird. Um ein kontrolliertes Absenken des Schaltelementdrucks p_K zu erreichen, wird zum Zeitpunkt t7 der Versorgungsdruck p_V sprungartig auf das das Niveau vor dessen Absenkung bzw. auf das Niveau des eingeschlossenen Schaltelementdrucks p_K erhöht. Gleichzeitig wird der Steuerdruck p_S ebenfalls sprungartig aktiviert, was eine Verschiebung des Entsperrkörpers in die Entsperrstellung und damit ein Entsperren des Rückschlagventils bewirkt, wodurch der Schaltelementzylinder mit der Druckstelleinrichtung für den Versorgungsdruck p_V hydraulisch verbunden ist.

Da der Versorgungsdruck p_V auf dem Niveau des eingeschlossenen Schaltelementdrucks p_K ist, bricht dieser beim Entsperren des Rückschlagventils nicht ein. Nach dem Entsperren, das sich in einer endlichen Zeit vollzieht, kommt es kurz nach dem Zeitpunkt t7 zum Absinken des Schaltelementdrucks p_K bis auf Umgebungsdruck p_0, da der Schaltelementzylinder nun durch die Druckstelleinrichtung im hydraulischen Schaltgerät mit einem drucklosen Bereich verbunden ist. Zum Zeitpunkt t8 ist der Umgebungsdruck p_0 im Schaltelementzylinder erreicht und das Schaltelement voll geöffnet. Der Steuerdruck p_S wird sprungartig reduziert bzw. drucklos gemacht, wodurch der Entsperrkörper wieder die neutrale Stellung einnimmt.

### Bezugszeichen

- 100: Hydraulische Steuerungsvorrichtung
- 101: Absperrventil
- 102: hydraulisches Schaltgerät
- 103: Druckstelleinrichtung
- 104: Druckstelleinrichtung
- 105: druckloser Bereich
- 106: Schaltelement
- 107: Schaltelementzylinder
- 10**8**: Gehäusekörper
- 110: Entsperreinrichtung
- 111: Entsperrkolben
- 112: Stirnfläche
- 113: Stößel
- 114: Entsperrzylinderbohrung
- 115: Stößelbohrung
- 116: Druckfeder
- 117: Anschlag neutrale Stellung
- 118: Entsperranschlag
- 119: Entsperrkörper
- 120: Rückschlagventil
- 121: Verschlusskörper, Sitzkolben
- 123: Verschlusskörperbohrung
- 124: Versorgungsbohrung
- 125: Ventilsitz
- 126: Ventilfeder
- 131: Steuerdruckanschluss
- 132: Entlastungsanschluss
- 133: Versorgungsdruckanschluss
- 134: Schaltelementanschluss
- 200: Hydraulische Steuerungsvorrichtung
- 201: Absperrventil
- 202: hydraulisches Schaltgerät
- 203: Druckstelleinrichtung
- 204: Druckstelleinrichtung
- 205: druckloser Bereich
- 206: Schaltelement
- 207: Schaltelementzylinder
- 208: Gehäusekörper
- 210: Entsperreinrichtung
- 211: Entsperrkolben
- 212: Stirnfläche
- 213: Stößel
- 214: Entsperrzylinderbohrung
- 215: Stößelbohrung
- 216: Druckfeder
- 217: Anschlag neutrale Stellung
- 218: Entsperranschlag
- 219: Entsperrkörper
- 220: Rückschlagventil
- 221: Verschlusskörper, Sitzkolben
- 223: Verschlusskörperbohrung
- 224: Versorgungsbohrung
- 225: Ventilsitz
- 226: Ventilfeder
- 231: Steuerdruckanschluss
- 232: Entlastungsanschluss
- 233: Versorgungsdruckanschluss
- 234: Schaltelementanschluss
- 301: Absperrventil
- 308: Gehäusekörper
- 310: Entsperreinrichtung
- 311: Entsperrkolben
- 312: Stirnfläche
- 313: Stößel
- 314: Entsperrzylinderbohrung
- 315: Stößelbohrung
- 316: Druckfeder
- 317: Anschlag neutrale Stellung
- 318: Entsperranschlag
- 319: Entsperrkörper
- 320: Rückschlagventil
- 321: Verschlusskörper, Sitzkolben
- 322: Fenster
- 323: Verschlusskörperbohrung
- 324: Versorgungsbohrung
- 325: Ventilsitz
- 326: Ventilfeder
- 327: Kolbenabschnitt
- 328: Kolbenabschnitt
- 329: Rückschlagventilverschluss
- 331: Steuerdruckanschluss
- 332: Kühlölanschluss
- 333: Versorgungsdruckanschluss
- 334: Schaltelementanschluss
- 340: Welle
- 341: Ventilaufnahmebohrung
- 342: Dichtring
- 343: Dichtring
- 344: Dichtring
- 352: Kühlölkanal
- 353: Versorgungskanal
- 354: Schaltelementkanal
- 361: Gehäusekörperabschnitt
- 362: Gehäusekörperabschnitt
- 363: Gehäusekörperabschnitt
- 401: Absperrventil
- 406: Schaltelement
- 407: Schaltelementzylinder
- 408: Gehäusekörper
- 410: Entsperreinrichtung
- 411: Entsperrkolben
- 413: Stößel
- 419: Entsperrkörper
- 420: Rückschlagventil
- 421: Verschlusskörper, Sitzkolben
- 441: Ventilaufnahmebohrung
- 451: Steuerkanal
- 452: Kühlölkanal
- 453: Versorgungskanal
- 460: Getriebegehäuse
- 461: Zwischenplatte
- 462: hydrodynamischer Drehmomentwandler
- 463: Wandlerglocke
- 501: Absperrventil
- 507: Schaltelementzylinder
- 508a: äußerer Gehäusekörper
- 508b: innerer Gehäusekörper
- 510: Entsperreinrichtung
- 511: Entsperrkolben
- 513: Stößel
- 513a: Anschlagabsatz
- 513b: Stößelspitze
- 514: Entsperrkolbenraum
- 515: Stößelführung
- 516: Druckfederelement
- 517: Anschlag neutrale Stellung
- 519: Entsperrkörper
- 520: Rückschlagventil
- 521: Verschlusskörper, Sitzkolben
- 522: Dichtring
- 523: Verschlusskörperraum
- 524: Versorgungskanal
- 525: Ventilsitz
- 526: Ventilfeder
- 531: Steueranschluss
- 532: Kühlölanschluss
- 533: Versorgungdruckanschluss
- 534: Schaltelementanschluss
- 540: Welle
- 543: Dichtring
- 544: Dichtring
- 545: Dichtring
- 551: Steuerdruckkanal
- 552: Kühlölkanal
- 553: Versorgungskanal
- 554: Schaltelementkanal
- A: Wellenachse
- d_1: Entsperrkolbendurchmesser
- d_2: Stößeldurchmesser
- d_3: Ventilsitzdurchmesser
- d_4: Verschlusskörperdurchmesser
- M: Motormoment
- p_K: Schaltelementdruck
- p_KS: Kühl-/Schmierdruck
- p_S: Steuerdruck
- p_V: Versorgungsdruck
- p_0: Umgebungsdruck
- t: Zeit
- t0 bis t9: Zeitpunkte

## Patentansprüche

1. Hydraulische Steuerungseinrichtung (100, 200) für ein Automatikgetriebe eines Kraftfahrzeugs mit mehreren Schaltelementen (106, 206) zur schaltbaren Übertragung eines Drehmoments, die hydraulische Steuerungseinrichtung (100, 200) mindestens eine erste Druckstelleinrichtung (103, 203) und mindestens ein Absperrventil (101, 201) umfassend, wobei die Schaltelemente (106, 206) jeweils einen Schaltelementzylinder (107, 207) aufweisen, welcher jeweils zur Übertragung eines Drehmoments mit einem Versorgungsdruck (p_V) aus der ersten Druckstelleinrichtung (103, 203) beaufschlagbar ist, und wobei das Absperrventil (101, 201) zwischen der ersten Druckstelleinrichtung (103, 203) und dem jeweiligen Schaltelementzylinder (107, 207) angeordnet ist und hydraulisch mittels eines Steuerdrucks (p_S) aus einer zweiten Druckstelleinrichtung (104, 204) in mindestens zwei Schaltstellungen schaltbar ist, wobei in einer ersten Schaltstellung des Absperrventils (101, 201) die erste Druckstelleinrichtung (103, 203) durch das Absperrventil (101, 201) mit dem Schaltelementzylinder (107, 207) hydraulisch verbunden ist so dass der Versorgungsdruck (p_V) gleich einem Schaltelementdruck (p_S) im Schaltelementzylinder (107, 207) ist, und wobei in einer zweiten Schaltstellung des Absperrventils (101, 201) der Schaltelementzylinder (107, 207) von dem Absperrventil (101, 201) gegenüber der restlichen hydraulischen Steuerungseinrichtung und damit auch der ersten Druckstelleinrichtung (103, 203) derart dicht verschließbar ist, so dass der im Schaltelementzylinder (107, 207) anstehende Schaltelementdruck (p_K) nicht unter einen bestimmten Wert absinken kann auch wenn der Versorgungsdruck (p_V) aus der ersten Druckstelleinrichtung (103, 203) geringer ist als der Schaltelementdruck (p_K) im Schaltelementzylinder (107, 207), **dadurch gekennzeichnet, dass** das Absperrventil (101, 201) als entsperrbares Rückschlagventil ausgebildet ist, umfassend ein Rückschlagventil (120, 220) und eine Entsperreinrichtung (110, 210), welche mittels des Steuerdrucks (p_S) aus der zweiten Druckstelleinrichtung (104, 204) betätigbar ist.

2. Hydraulische Steuerungseinrichtung nach Anspruch 1, **dadurch gekennzeichnet, dass** das Rückschlagventil (120, 220) einen bewegbaren Verschlusskörper (121, 221) und die Entsperreinrichtung (110, 210) einen bewegbaren Entsperrkörper (119, 219) umfasst, wobei der Verschlusskörper (121, 221) zwischen einer Verschlussstellung, in welcher der Schaltelementzylinder gegenüber der restlichen hydraulischen Steuerungseinrichtung (100, 200) abgeschlossen ist, und mindestens einer Öffnungsstellung, in welcher der Schaltelementzylinder (107, 207) zur restlichen Steuerungseinrichtung hin geöffnet ist, bewegbar ist, und wobei der Entsperrkörper (119, 219) zwischen einer neutralen Stellung, in welcher der Entsperrkörper (119, 219) nicht mit dem Verschlusskörper (121, 221) wirkverbunden ist, und einer Entsperrstellung an einen Entsperranschlag bewegbar ist, wobei in der Entsperrstellung der Entsperrkörper (119, 219) derart auf den Verschlusskörper (121, 221) wirksam ist, dass dieser mittels des Entsperrkörpers (119, 219) in die Öffnungsstellung verschoben ist.

3. Hydraulische Steuerungseinrichtung nach Anspruch 2, **dadurch gekennzeichnet, dass** die Entsperreinrichtung (110, 210) eine Druckfeder (116, 216) aufweist und dass der Entsperrkörper (119, 219) von einer Seite her mit dem Steuerdruck (p_S) aus der zweiten Druckstelleinrichtung (104, 204) beaufschlagbar ist und von einer anderen Seite her mit einer Kraft der Druckfeder (116, 216) belastet ist.

4. Hydraulische Steuerungseinrichtung nach Anspruch 3, **dadurch gekennzeichnet, dass** der Entsperrkörper (119, 219) durch die Wirkung des Steuerdruckes (p_S) in die Entsperrstellung bewegbar ist.

5. Hydraulische Steuerungseinrichtung nach Anspruch 3, **dadurch gekennzeichnet, dass** der Entsperrkörper (119, 219) durch die Wirkung der Kraft der Druckfeder (116, 216) in die Entsperrstellung bewegbar ist, falls der auf den Entsperrkörper (119, 219) wirkende Steuerdruck (p_S) nur so hoch ist, dass die Kraft auf den Entsperrkörper (119, 219) aus dem Steuerdruck (p_S) geringer ist als die Kraft der Druckfeder (116, 216).

6. Hydraulische Steuerungseinrichtung nach einem der Ansprüche 2 bis 5, **dadurch gekennzeichnet, dass** der Entsperrkörper (119, 219) einen Entsperrkolben (111, 211, 311) und einen Stößel (113, 213, 313) umfasst, wobei der Stößel (113, 213, 313) mit dem Entsperrkolben (111, 211, 311) axial zumindest in die Richtung des Verschlusskörpers (121, 221, 321) des Rückschlagventils (120, 220, 320) verschiebbar ist.

7. Hydraulische Steuerungseinrichtung nach Anspruch 6, **dadurch gekennzeichnet, dass** das Rückschlagventil (120, 220, 320) als Sitzventil ausgebildet ist, und dass der Entsperrkolben (111, 211, 311, 411) zylindrisch und zumindest ein Längenabschnitt des Stößels (113, 213, 313, 413) zylindrisch ausgebildet ist, wobei ein Stößeldurchmesser (d_2) kleiner ist als ein Entsperrkolbendurchmesser (d_1) und sich der Stößel (113, 213, 313, 413) von einer Stirnfläche (112, 212) des Entsperrkolbens (111, 211, 311, 411) in axialer Richtung erstreckt, und dass das Absperrventil (101, 201, 301, 401) eine in einem Gehäusekörper (108, 208, 308, 408) ausgebildete Ventilbohrung mit Bohrungsabschnitten unterschiedlicher Durchmesser aufweist, umfassend in dieser Reihenfolge aneinander anschließend eine Entsperrzylinderbohrung (114, 214, 314), eine Stößelbohrung (115, 215, 315), eine Versorgungsbohrung (124, 224, 324) und eine Verschlusskörperbohrung (123, 223, 323), wobei in die Entsperrzylinderbohrung (114, 214, 314) axial voneinander beabstandet ein Steuerdruckanschluss (131, 231, 331) zu der zweiten Druckstelleinrichtung (104, 204) und ein Entlastungsanschluss (132, 232, 332) zu einem drucklosen Bereich (105, 205) oder einem Niederdruckbereich münden, wobei in die Versorgungsbohrung (124, 224, 324) ein Versorgungsdruckanschluss (133, 233, 333) zu der ersten Druckstelleinrichtung (103, 203) und in die Verschlusskörperbohrung (123, 223, 323) ein Schaltelementanschluss (134, 234, 334) zu dem Schaltelementzylinder (107, 207) münden, wobei zwischen Versorgungsbohrung (124, 224, 324) und Verschlusskörperbohrung (123, 223, 323) ein Ventilsitz (125, 225, 325) ausgebildet ist, und wobei in der Entsperrzylinderbohrung (114, 214, 314) der Entsperrkolben (111, 211, 311, 411) zwischen zwei Anschlagstellungen, nämlich der neutralen Stellung und der Entsperrstellung, axial verschiebbar angeordnet ist und von einer vorgespannten Druckfeder (116, 216, 316) auf der Seite des zweiten Anschlusskanals (132, 232, 332) mit deren Kraft beaufschlagt wird, wobei der Stößel (113, 213, 313) in der Stößelbohrung (115, 215, 315) geführt wird, und wobei in der Verschlusskörperbohrung (123, 223, 323) der Verschlusskörper (121, 221, 321, 421) axial bewegbar ist und in der Verschlussstellung gegen den Ventilsitz (125, 225, 325) gedrückt wird, wenn die Kraft aus dem Schaltelementdruck (p_K) auf den Verschlusskörper (121, 221, 321, 421) größer ist als die vom Versorgungsdruck (p_V) bewirkte Kraft.

8. Hydraulische Steuerungseinrichtung nach den Ansprüchen 4 und 7, **dadurch gekennzeichnet, dass** der Entsperrkolbendurchmesser (d_1) und damit die vom Steuerdruck (p_S) beaufschlagte Wirkfläche so gewählt ist, dass der Steuerdruck (p_S) auch bei einem minimalen Druck, der bei einem abgesperrten Schaltelementzylinder (107) von der Pumpe erzeugt wird, ausreichend ist, um den Verschlusskörper (121) mittels des Entsperrkörpers (119) in die Öffnungsstellung zu bewegen.

9. Hydraulische Steuerungseinrichtung nach den Ansprüchen 5 und 7, **dadurch gekennzeichnet, dass** der Entsperrkolbendurchmesser (d_1) des Entsperrkolbens (211) und damit die vom Steuerdruck (p_S) beaufschlagte Wirkfläche so gewählt ist, dass der Steuerdruck (p_S) auch bei einem minimalen Druck, der bei einem abgesperrten Schaltelementzylinder (207) von der Pumpe erzeugt wird, ausreichend ist, um den Entsperrkörper (219) entgegen der Kraft der Druckfeder (216) in der neutralen Stellung zu halten und dass die Kennlinie der Druckfeder (216) und die vom Schaltelementdruck (p_K) beaufschlagte Wirkfläche des Verschlusskörpers (212) so gewählt sind, dass die Kraft der Druckfeder (216) ausreicht um den Verschlusskörper (219) auch bei dem maximal auftretenden Schaltelementdruck (p_K) mittels des Entsperrkörpers (219) in die Öffnungsstellung zu bewegen.

10. Hydraulische Steuerungseinrichtung nach einem der Ansprüche 7 bis 9, **dadurch gekennzeichnet, dass** das Absperrventil (301) in einer Welle (340) eines Getriebes angeordnet ist.

11. Hydraulische Steuerungseinrichtung nach einem der Ansprüche 8 bis 10, **dadurch gekennzeichnet, dass** der Verschlusskörper als Sitzkolben (321) ausgebildet ist und dessen dem Ventilsitz (325) zugewandtes Ende (328) sphärisch oder kegelförmig ausgebildet ist.

12. Hydraulische Steuerungseinrichtung nach Anspruch 11, **dadurch gekennzeichnet, dass** zwischen dem Sitzkolben (321) und einem dem Ventilsitz (325) entgegengesetzten Ende (329) der Verschlusskörperbohrung eine als Druckfeder ausgebildete Ventilfeder (326) vorgespannt angeordnet ist, deren Kraft auf den Sitzkolben (321) in Richtung des Ventilsitzes (325) wirksam ist.

13. Hydraulische Steuerungseinrichtung nach einem der Ansprüche 7 bis 12, **dadurch gekennzeichnet, dass** die Entsperrzylinderbohrung (314), die Stößelführung (315), die Versorgungsbohrung (324) und die Verschlusskörperbohrung (323), sowie Entsperrkolben (311) und Stößel (313) konzentrisch zueinander sind und deren axiale Lagen und Längen so gewählt sind, dass in der Entsperrstellung des Entsperrkolbens (311) der Stößel (313) so weit in die Verschlusskörperbohrung (323) hineinragt, dass der Stößel (313) einen Anschlag für den Verschlusskörper (321) bildet, so dass dieser in einer Öffnungsstellung befindlich ist.

14. Hydraulische Steuerungsvorrichtung nach einem der vorangegangenen Ansprüche, **dadurch gekennzeichnet, dass** das Absperrventil (301, 401) einen Gehäusekörper (308, 408) umfasst, in welchem die Entsperreinrichtung (310, 410) und das Rückschlagventil (320, 420) angeordnet sind, so dass das Absperrventil (301, 401) eine modulare Einheit bildet, wobei der Gehäusekörper (308, 408) eine zylindrische Außenkontur mit einem Außendurchmesser oder mit mehreren zylindrischen Abschnitten mit unterschiedlichen Außendurchmessern aufweist, so dass das Absperrventil (301, 401) in eine Ventilaufnahmebohrung (341, 441) einsetzbar ist.

15. Hydraulische Steuerungsvorrichtung nach Anspruch 6, **dadurch gekennzeichnet, dass** der Verschlusskörper (521) und der Entsperrkolben (511) eines Absperrventils (501) ringförmig ausgebildet sind und dass der Entsperrkolben (511) in einem hohlzylindrischen Entsperrkolbenraum (514) und der Verschlusskörper (521) in einem hohlzylindrischen Verschlusskörperraum (523) angeordnet sind, wobei der Entsperrkolbenraum (514) und der Verschlusskörperraum (523) innerhalb eines eine Welle (540) umschließenden Gehäusekörpers (508, 509) ausgebildet sind, und dass das Absperrventil (501) mehrere Stößel (513) umfasst, und dass der Verschlusskörper (521) mittels eines Federelementes (526) gegen einen ringförmigen Ventilsitz (525) vorgespannt ist und zwischen dem Entsperrkolben (511) und einem Ende des Entsperrkolbenraumes (514) mindestens ein Druckfederelement (516) angeordnet ist, und wobei die Stößel (513) so ausgebildet und angeordnet sind, dass diese mit dem Entsperrkolben (511) zumindest in Richtung des Verschlusskörpers (521) verschiebbar sind, wenn sich der Entsperrkolben (511) in die Entsperrstellung bewegt, und vom Verschlusskörper (521) in die entgegengesetzte Richtung verschiebbar sind, wenn sich der Entsperrkolben (511) in der neutralen Stellung befindet, wobei ein Steuerdruckanschluss (531) und ein Versorgungsdruckanschluss (533) jeweils zu einer der beiden Druckstelleinrichtungen, ein Schaltelementanschluss (534) zum Schaltelementzylinder (507) und ein Entlastungsanschluss zu einem drucklosen Bereich oder einem Niederdruckbereich radial von innen oder von außen in den Verschlusskörperraum (523) und den Entsperrkolbenraum (514) münden.

16. Hydraulische Steuerungseinrichtung nach Anspruch 15, **dadurch gekennzeichnet, dass** die Länge der Stößel (513) in Verbindung mit der axialen Position des Entsperrkolbens (511) in der Entsperrstellung und der axialen Position des Ventilsitzes (525) so gewählt ist, dass der Stößel (513) so weit durch den Ventilsitz (525) in den Verschlusskörperraum (523) hineinragt, dass der Stößel (513) einen Anschlag für den Verschlusskörper (521) bildet, so dass dieser in einer Öffnungsstellung befindlich ist.

17. Automatikgetriebe mit einer hydraulischen Steuerungseinrichtung nach einem der Ansprüche 1 bis 16.

## Claims

1. Hydraulic control device (100, 200) for an automatic transmission of a motor vehicle having a plurality of switching elements (106, 206) for the switchable transmission of a torque, the hydraulic control device (100, 200) comprising at least one first pressure actuating device (103, 203) and at least one shut-off valve (101, 201), the switching elements (106, 206) in each case having a switching element cylinder (107, 207) which can be loaded in each case with a supply pressure (p_V) from the first pressure actuating device (103, 203) in order to transmit a torque, and the shut-off valve (101, 201) being arranged between the first pressure actuating device (103, 203) and the respective switching element cylinder (107, 207), and it being possible for the said shut-off valve (101, 201) to be switched hydraulically by means of a control pressure (p_S) from a second pressure actuating device (104, 204) into at least two switching positions, the first pressure actuating device (103, 203) being connected hydraulically to the switching element cylinder (107, 207) by way of the shut-off valve (101, 201) in a first switching position of the shut-off valve (101, 201), with the result that the supply pressure (p_V) is identical to a switching element pressure (p_S) in the switching element cylinder (107, 207), and it being possible, in a second switching position of the shut-off valve (101, 201), for the switching element cylinder (107, 207) to be closed by the shut-off valve (101, 201) with respect to the remaining hydraulic control device and therefore also with respect to the first pressure actuating device (103, 203) in a sealed manner such that the switching element pressure (p_K) which prevails in the switching element cylinder (107, 207) cannot drop below a defined value, even if the supply pressure (p_V) from the first pressure actuating device (103, 203) is lower than the switching element pressure (p_K) in the switching element cylinder (107, 207), **characterized in that** the shut-off valve (101, 201) is configured as an unlockable check valve, comprising a check valve (120, 220) and an unlocking device (110, 210) which can be actuated by means of the control pressure (p_S) from the second pressure actuating device (104, 204).

2. Hydraulic control device according to Claim 1, **characterized in that** the check valve (120, 220) comprises a movable closure body (121, 221), and the unlocking device (110, 210) comprises a movable unlocking body (119, 219), it being possible for the closure body (121, 221) to be moved between a closure position, in which the switching element cylinder is closed off with respect to the remaining hydraulic control device (100, 200), and at least one open position, in which the switching element cylinder (107, 207) is open towards the remaining control device, and it being possible for the unlocking body (119, 219) to be moved between a neutral position, in which the unlocking body (119, 219) is not operatively connected to the closure body (121, 221), and an unlocking position against an unlocking stop, the unlocking body (119, 219) acting on the closure body (121, 221) in the unlocking position in such a way that the said closure body (121, 221) is displaced into the open position by means of the unlocking body (119, 219).

3. Hydraulic control device according to Claim 2, **characterized in that** the unlocking device (110, 210) has a compression spring (116, 216), and **in that** the unlocking body (119, 219) can be loaded from one side with the control pressure (p_S) from the second pressure actuating device (104, 204) and is loaded from another side with a force of the compression spring (116, 216).

4. Hydraulic control device according to Claim 3, **characterized in that** the unlocking body (119, 219) can be moved into the unlocking position by way of the action of the control pressure (p_S).

5. Hydraulic control device according to Claim 3, **characterized in that** the unlocking body (119, 219) can be moved into the unlocking position by way of the action of the force of the compression spring (116, 216) if the control pressure (p_S) which acts on the unlocking body (119, 219) is only so high that the force on the unlocking body (119, 219) from the control pressure (p_S) is lower than the force of the compression spring (116, 216).

6. Hydraulic control device according to one of Claims 2 to 5, **characterized in that** the unlocking body (119, 219) comprises an unlocking piston (111, 211, 311) and a tappet (113, 213, 313), it being possible for the tappet (113, 213, 313) to be displaced axially together with the unlocking piston (111, 211, 311) at least in the direction of the closure body (121, 221, 321) of the check valve (120, 220, 320).

7. Hydraulic control device according to Claim 6, **characterized in that** the check valve (120, 220, 320) is configured as a seat valve, and **in that** the unlocking piston (111, 211, 311, 411) is of cylindrical configuration and at least one length section of the tappet (113, 213, 313, 413) is of cylindrical configuration, a tappet diameter (d_2) being smaller than an unlocking piston diameter (d_1), and the tappet (113, 213, 313, 413) extending in the axial direction from an end face (112, 212) of the unlocking piston (111, 211, 311, 411), and **in that** the shut-off valve (101, 201, 301, 401) has a valve bore which is configured in a housing body (108, 208, 308, 408) with bore sections of different diameters, comprising, in this sequence in a manner which adjoins one another, an unlocking cylinder bore (114, 214, 314), a tappet bore (115, 215, 315), a supply bore (124, 224, 324) and a closure body bore (123, 223, 323), a control pressure connector (131, 231, 331) to the second pressure actuating device (104, 204) and a relief connector (132, 232, 332) to a pressureless region (105, 205) or a low pressure region opening into the unlocking cylinder bore (114, 214, 314) in a manner which is spaced apart axially from one another, a supply pressure connector (133, 233, 333) to the first pressure actuating device (103, 203) opening into the supply bore (124, 224, 324), and a switching element connector (134, 234, 334) to the switching element cylinder (107, 207) opening into the closure body bore (123, 223, 323), a valve seat (125, 225, 325) being configured between the supply bore (124, 224, 324) and the closure body bore (123, 223, 323), and the unlocking piston (111, 211, 311, 411) being arranged in the unlocking cylinder bore (114, 214, 314) such that it can be displaced axially between two stop positions, namely the neutral position and the unlocking position, and the said unlocking piston (111, 211, 311, 411) being loaded by a prestressed compression spring (116, 216, 316) on the side of the second connector duct (132, 232, 332) with the force of the said compression spring (116, 216, 316), the tappet (113, 213, 313) being guided in the tappet bore (115, 215, 315), and it being possible for the closure body (121, 221, 321, 421) to be moved axially in the closure body bore (123, 223, 323), and the said closure body (121, 221, 321, 421) being pressed against the valve seat (125, 225, 325) in the closure position if the force from the switching element pressure (p_K) on the closure body (121, 221, 321, 421) is greater than the force which is brought about by the supply pressure (p_V).

8. Hydraulic control device according to Claims 4 and 7, **characterized in that** the unlocking piston diameter (d_1) and therefore the active area which is loaded by the control pressure (p_S) are selected in such a way that the control pressure (p_S) is sufficient, even at a minimum pressure which is generated by the pump in the case of a locked switching element cylinder (107), in order to move the closure body (121) into the open position by means of the unlocking body (119).

9. Hydraulic control device according to Claims 5 and 7, **characterized in that** the unlocking piston diameter (d_1) of the unlocking piston (211) and therefore the active area which is loaded by the control pressure (p_S) are selected in such a way that the control pressure (p_S) is sufficient, even at a minimum pressure which is generated by the pump in the case of a locked switching element cylinder (207), in order to hold the unlocking body (219) in the neutral position counter to the force of the compression spring (216), and **in that** the characteristic curve of the compression spring (216) and that active area of the closure body (212) which is loaded by the switching element pressure (p_K) are selected in such a way that the force of the compression spring (216) is sufficient to move the closure body (219) into the open position by means of the unlocking body (219) even at the maximum occurring switching element pressure (p_K).

10. Hydraulic control device according to one of Claims 7 to 9, **characterized in that** the shut-off valve (301) is arranged in a shaft (340) of a transmission.

11. Hydraulic control device according to one of Claims 8 to 10, **characterized in that** the closure body is configured as a seat piston (321) and its end (328) which faces the valve seat (325) is of spherical or conical configuration.

12. Hydraulic control device according to Claim 11, **characterized in that** a valve spring (326) which is configured as a compression spring is arranged in a prestressed manner between the seat piston (321) and an opposite end (329) of the closure body bore with respect to the valve seat (325), the force of said valve spring (326) acting on the seat piston (321) in the direction of the valve seat (325).

13. Hydraulic control device according to one of Claims 7 to 12, **characterized in that** the unlocking cylinder bore (314), the tappet guide (315), the supply bore (324), the closure body bore (323), the unlocking piston (311) and the tappet (313) are concentric with respect to one another and their axial positions and lengths are selected in such a way that, in the unlocking position of the unlocking piston (311), the tappet (313) protrudes into the closure body bore (323) to such an extent that the tappet (313) forms a stop for the closure body (321), with the result that the latter is situated in an open position.

14. Hydraulic control device according to one of the preceding claims, **characterized in that** the shut-off valve (301, 401) comprises a housing body (308, 408), in which the unlocking device (310, 410) and the check valve (320, 420) are arranged, with the result that the shut-off valve (301, 401) forms a modular unit, the housing body (308, 408) having a cylindrical external contour with an external diameter or with a plurality of cylindrical sections with different external diameters, with the result that the shut-off valve (301, 401) can be inserted into a valve receptacle bore (341, 441).

15. Hydraulic control device according to Claim 6, **characterized in that** the closure body (521) and the unlocking piston (511) of a shut-off valve (501) are of annular configuration, and **in that** the unlocking piston (511) is arranged in a hollow-cylindrical unlocking piston space (514) and the closure body (521) is arranged in a hollow-cylindrical closure body space (523), the unlocking piston space (514) and the closure body space (523) being configured within a housing body (508, 509) which encloses a shaft (540), and **in that** the shut-off valve (501) comprises a plurality of tappets (513), and **in that** the closure body (521) is prestressed against an annular valve seat (525) by means of a spring element (526), and at least one compression spring element (516) is arranged between the unlocking piston (511) and an end of the unlocking piston space (514), and the tappets (513) being configured and arranged in such a way that they can be displaced with the unlocking piston (511) at least in the direction of the closure body (521) when the unlocking piston (511) moves into the unlocking position, and can be displaced by the closure body (521) in the opposite direction when the unlocking piston (511) is situated in the neutral position, a control pressure connector (531) and a supply pressure connector (533) in each case to one of the two pressure actuating devices, a switching element connector (534) to the switching element cylinder (507) and a relief connector to a pressureless region or a low pressure region opening radially from the inside or from the outside into the closure body space (523) and the unlocking piston space (514).

16. Hydraulic control device according to Claim 15, **characterized in that** the length of the tappets (513) is selected in conjunction with the axial position of the unlocking piston (511) in the unlocking position and the axial position of the valve seat (525) in such a way that the tappet (513) protrudes through the valve seat (525) into the closure body space (523) to such an extent that the tappet (513) forms a stop for the closure body (521), with the result that the latter is situated in an open position.

17. Automatic transmission having a hydraulic control device according to one of Claims 1 to 16.

## Revendications

1. Dispositif de commande hydraulique (100, 200) pour une transmission automatique d'un véhicule automobile, comprenant plusieurs éléments de commutation (106, 206) pour le transfert commutable d'un couple, le dispositif de commande hydraulique (100, 200) comprenant au moins un premier dispositif de commande de pression (103, 203) et au moins une soupape d'arrêt (101, 201), les éléments de commutation (106, 206) présentant chacun un cylindre d'élément de commutation (107, 207) qui peut être sollicité à chaque fois pour transférer un couple avec une pression d'alimentation (p_V) provenant du premier dispositif de commande de pression (103, 203), et la soupape d'arrêt (101, 201) étant disposée entre le premier dispositif de commande de pression (103, 203) et le cylindre d'élément de commutation respectif (107, 207) et pouvant être connectée hydrauliquement au moyen d'une pression de commande (p_S) provenant d'un deuxième dispositif de commande de pression (104, 204) dans au moins deux positions de commutation, où, dans une première position de commutation de la soupape d'arrêt (101, 201), le premier dispositif de commande de pression (103 ; 203) est connecté hydrauliquement par la soupape d'arrêt (101, 201) au cylindre d'élément de commutation (107, 207) de telle sorte que la pression d'alimentation (p_V) soit égale à une pression de l'élément de commutation (p_S) dans le cylindre d'élément de commutation (107, 207), et où, dans une deuxième position de commutation de la soupape d'arrêt (101, 201), le cylindre d'élément de commutation (107, 207) peut être fermé de manière étanche par la soupape d'arrêt (101, 201) par rapport au reste du dispositif de commande hydraulique et par conséquent également par rapport au premier dispositif de commande de pression (103, 203) de telle sorte que la pression d'élément de commutation (p_K) dans le cylindre d'élément de commutation (107, 207) ne puisse pas descendre en dessous d'une valeur déterminée même lorsque la pression d'alimentation (p_V) provenant du premier dispositif de commande pression (103, 203) est inférieure à la pression d'élément de commutation (p_K) dans le cylindre d'élément de commutation (107, 207), **caractérisé en ce que** la soupape d'arrêt (101, 201) est réalisée sous forme de clapet antiretour déverrouillable, comprenant un clapet antiretour (120, 220) et un dispositif de déverrouillage (110, 210), qui peut être commandé au moyen de la pression de commande (p_S) provenant du deuxième dispositif de commande de pression (104, 204).

2. Dispositif de commande hydraulique selon la revendication 1, **caractérisé en ce que** le clapet antiretour (120, 220) comprend un corps de fermeture déplaçable (121, 221) et le dispositif de déverrouillage (110, 210) comprend un corps de déverrouillage déplaçable (119, 219), le corps de fermeture (121, 221) pouvant être déplacé entre une position de fermeture dans laquelle le cylindre d'élément de commutation est fermé par rapport au reste du dispositif de commande hydraulique (100, 200), et au moins une position d'ouverture dans laquelle le cylindre d'élément de commutation (107, 207) est ouvert par rapport au reste du dispositif de commande, et le corps de déverrouillage (119, 219) pouvant être déplacé entre une position neutre dans laquelle le corps de déverrouillage (119, 219) n'est pas en liaison fonctionnelle avec le corps de fermeture (121, 221) et une position de déverrouillage au niveau d'une butée de déverrouillage, le corps de déverrouillage (119, 219), dans la position de déverrouillage, agissant sur le corps de fermeture (121, 221) de telle sorte que celui-ci soit déplacé au moyen du corps de déverrouillage (119, 219) dans la position d'ouverture.

3. Dispositif de commande hydraulique selon la revendication 2, **caractérisé en ce que** le dispositif de déverrouillage (110, 210) présente un ressort de compression (116, 216) et **en ce que** le corps de déverrouillage (119, 219) peut être sollicité depuis un côté avec la pression de commande (p_S) provenant du deuxième dispositif de commande de pression (104, 204), et est sollicité depuis un autre côté avec une force du ressort de compression (116, 216).

4. Dispositif de commande hydraulique selon la revendication 3, **caractérisé en ce que** le corps de déverrouillage (119, 219) peut être déplacé sous l'effet de la pression de commande (p_S) dans la position de déverrouillage.

5. Dispositif de commande hydraulique selon la revendication 3, **caractérisé en ce que** le corps de déverrouillage (119, 219) peut être déplacé sous l'effet de la force du ressort de compression (116, 216) dans la position de déverrouillage, au cas où la pression de commande (p_S) agissant sur le corps de déverrouillage (119, 219) est telle que la force agissant sur le corps de déverrouillage (119, 219) provenant de la pression de commande (p_S) soit inférieure à la force du ressort de compression (116, 216).

6. Dispositif de commande hydraulique selon l'une quelconque des revendications 2 à 5, **caractérisé en ce que** le corps de déverrouillage (119, 219) comprend un piston de déverrouillage (111, 211, 311) et un poussoir (113, 213, 313), le poussoir (113, 213, 313) pouvant être déplacé avec le piston de déverrouillage (111, 211, 311) axialement au moins dans la direction du corps de fermeture (121, 221, 321) du clapet antiretour (120, 220, 320).

7. Dispositif de commande hydraulique selon la revendication 6, **caractérisé en ce que** le clapet antiretour (120, 220, 320) est réalisé sous forme de soupape à siège, et **en ce que** le piston de déverrouillage (111, 211, 311, 411) est réalisé sous forme cylindrique et au moins une portion longitudinale du poussoir (113, 213, 313, 413) est réalisée sous forme cylindrique, un diamètre de poussoir (d_2) étant inférieur à un diamètre du piston de déverrouillage (d_1) et le poussoir (113, 213, 313, 413) s'étendant depuis une surface frontale (112, 212) du piston de déverrouillage (111, 211, 311, 411) dans la direction axiale, et **en ce que** la soupape d'arrêt (101, 201, 301, 401) présente un alésage de soupape réalisé dans un corps de boîtier (108, 208, 308, 408) avec des portions d'alésages de diamètres différents, comprenant, dans cet ordre, se raccordant les uns aux autres, un alésage de cylindre de déverrouillage (114, 214, 314), un alésage de poussoir (115, 215, 315), un alésage d'alimentation (124, 224, 324) et un alésage de corps de fermeture (123, 223, 323), un raccord de pression de commande (131, 231, 331) au deuxième dispositif de commande de pression (104, 204) et un raccord de détente (132, 232, 332) à une région sans pression (105, 205) ou à une région de basse pression débouchant de manière espacée axialement l'un de l'autre dans l'alésage de cylindre de déverrouillage (114, 214, 314), un raccord de pression d'alimentation (133, 233, 333) au premier dispositif de commande de pression (103, 203) débouchant dans l'alésage d'alimentation (124, 224, 324), et un raccord d'élément de commutation (134, 234, 334) au cylindre d'élément de commutation (107, 207) débouchant dans l'alésage de corps de fermeture (123, 223, 323), un siège de soupape (125, 225, 325) étant réalisé entre l'alésage d'alimentation (124, 224, 324) et l'alésage de corps de fermeture (123, 223, 323), et le piston de déverrouillage (111, 211, 311, 411) étant disposé dans l'alésage de cylindre de déverrouillage (114, 214, 314) de manière déplaçable axialement entre deux positions de butée, à savoir la position neutre et la position de déverrouillage, et étant sollicité par la force d'un ressort de compression précontraint (116, 216, 316) du côté du deuxième canal de raccordement (132, 232, 332), le poussoir (113, 213, 313) étant guidé dans l'alésage de poussoir (115, 215, 315), et dans l'alésage de corps de fermeture (123, 223, 323), le corps de fermeture (121, 221, 321, 421) pouvant être déplacé axialement et dans la position de fermeture étant pressé contre le siège de soupape (125, 225, 325), lorsque la force provenant de la pression de l'élément de commutation (p_K) appliquée au corps de fermeture (121, 221, 321, 421) est supérieure à la force provoquée par la pression d'alimentation (P_V).

8. Dispositif de commande hydraulique selon les revendications 4 et 7, **caractérisé en ce que** le diamètre du piston de déverrouillage (d_1) et par conséquent la surface active sollicitée par la pression de commande (p_S) sont choisis de telle sorte que la pression de commande (p_S) soit suffisante, même dans le cas d'une pression minimale générée par la pompe dans le cas où un cylindre d'élément de commutation (107) est bloqué, pour déplacer le corps de fermeture (121) au moyen du corps de déverrouillage (119) dans la position d'ouverture.

9. Dispositif de commande hydraulique selon les revendications 5 à 7, **caractérisé en ce que** le diamètre de piston de déverrouillage (d_1) du piston de déverrouillage (211) et par conséquent la surface active sollicitée par la pression de commande (p_S) sont choisis de telle sorte que la pression de commande (p_S) soit suffisante, même dans le cas d'une pression minimale générée par la pompe dans le cas où un cylindre de l'élément de commutation (207) est bloqué, pour maintenir le corps de déverrouillage (219) dans la position neutre à l'encontre de la force du ressort de compression (216), et **en ce que** la courbe caractéristique du ressort de compression (216) et la surface active du corps de fermeture (212) sollicitée par la pression de l'élément de commutation (p_K) sont choisis de telle sorte que la force du ressort de compression (216) suffise pour déplacer le corps de fermeture (219) dans la position d'ouverture au moyen du corps de déverrouillage (219) même lorsque la pression de l'élément de commutation (p_K) produite est maximale.

10. Dispositif de commande hydraulique selon l'une quelconque des revendications 7 à 9, **caractérisé en ce que** la soupape d'arrêt (301) est disposée dans un arbre (340) d'une transmission.

11. Dispositif de commande hydraulique selon l'une quelconque des revendications 8 à 10, **caractérisé en ce que** le corps de fermeture est réalisé sous forme de piston à siège (321) et son extrémité (328) tournée vers le siège de soupape (325) est réalisée sous forme sphérique ou conique.

12. Dispositif de commande hydraulique selon la revendication 11, **caractérisé en ce qu'**entre le piston à siège (321) et une extrémité (329) de l'alésage de corps de fermeture opposée au siège de soupape (325) est disposé de manière précontrainte un ressort de soupape (326) réalisé sous forme de ressort de compression dont la force agit sur le piston à siège (321) dans la direction du siège de soupape (325).

13. Dispositif de commande hydraulique selon l'une quelconque des revendications 7 à 12, **caractérisé en ce que** l'alésage de cylindre de déverrouillage (314), le guidage du poussoir (315), l'alésage d'alimentation (324) et l'alésage du corps de fermeture (323), ainsi que le piston de déverrouillage (311) et le poussoir (313) sont concentriques les uns aux autres et leurs positions axiales et leurs longueurs sont choisies de telle sorte que dans la position de déverrouillage du piston de déverrouillage (311), le poussoir (313) pénètre dans l'alésage de corps de fermeture (323) dans une mesure telle que le poussoir (313) forme une butée pour le corps de fermeture (321), de telle sorte que celui-ci soit dans une position d'ouverture.

14. Dispositif de commande hydraulique selon l'une quelconque des revendications précédentes, **caractérisé en ce que** la soupape d'arrêt (301, 401) comprend un corps de boîtier (308, 408) dans lequel sont disposés le dispositif de déverrouillage (310, 410) et le clapet antiretour (320, 420), de sorte que la soupape d'arrêt (301, 401) forme une unité modulaire, le corps de boîtier (308, 408) présentant un contour extérieur cylindrique avec un diamètre extérieur ou avec plusieurs portions cylindriques de diamètres extérieurs différents, de sorte que la soupape d'arrêt (301, 401) puisse être insérée dans un alésage de réception de soupape (341, 441).

15. Dispositif de commande hydraulique selon la revendication 6, **caractérisé en ce que** le corps de fermeture (521) et le piston de déverrouillage (511) d'une soupape d'arrêt (501) sont réalisés sous forme annulaire et **en ce que** le piston de déverrouillage (511) est disposé dans un espace de piston de déverrouillage cylindrique creux (514) et le corps de fermeture (521) est disposé dans un espace de corps de fermeture cylindrique creux (523), l'espace de piston de déverrouillage (514) et l'espace de corps de fermeture (523) étant réalisés à l'intérieur d'un corps de boîtier (508, 509) entourant un arbre (540), et **en ce que** la soupape d'arrêt (501) comprend plusieurs poussoirs (513), et **en ce que** le corps de fermeture (521) est précontraint au moyen d'un élément de ressort (526) contre un siège de soupape annulaire (525) et au moins un élément de ressort de compression (516) est disposé entre le piston de déverrouillage (511) et une extrémité de l'espace de piston de déverrouillage (514), et les poussoirs (513) étant réalisés et disposés de telle sorte qu'ils puissent être déplacés au moins dans la direction du corps de fermeture (521) avec le piston de déverrouillage (511), lorsque le piston de déverrouillage (511) se déplace dans la position de déverrouillage, et qu'ils puissent être déplacés depuis le corps de fermeture (521) dans le sens opposé lorsque le piston de déverrouillage (511) se trouve dans la position neutre, un raccord de pression de commande (531) et un raccord de pression d'alimentation (533) allant à chaque fois à l'un des deux dispositifs de commande de pression, un raccord d'élément de commutation (534) allant au cylindre d'élément de commutation (507) et un raccord de détente allant à une région sans pression ou à une région basse pression, débouchant radialement depuis l'intérieur vers l'extérieur dans l'espace de corps de fermeture (523) et dans l'espace de piston de déverrouillage (514).

16. Dispositif de commande hydraulique selon la revendication 15, **caractérisé en ce que** la longueur du poussoir (513) est choisie en relation avec la position axiale du piston de déverrouillage (511) dans la position de déverrouillage et en relation avec la position axiale du siège de soupape (525), de telle sorte que le poussoir (513) pénètre à travers le siège de soupape (525) dans l'espace de corps de fermeture (523) dans une mesure telle que le poussoir (513) forme une butée pour le corps de fermeture (521) de telle sorte que celui-ci se trouve dans une position d'ouverture.

17. Transmission automatique comprenant un dispositif de commande hydraulique selon l'une quelconque des revendications 1 à 16.
